(19) **Europäisches Patentamt European Patent Office Office européen des brevets**

(11) **EP 4 613 444 A1**

(12) **EUROPEAN PATENT APPLICATION**
published in accordance with Art. 153(4) EPC

(43) Date of publication:
10.09.2025 Bulletin 2025/37

(51) International Patent Classification (IPC):
**B25J 13/00** (2006.01)     **G05B 19/4093** (2006.01)
**G05B 19/4155** (2006.01)

(21) Application number: 23885587.8

(22) Date of filing: 24.10.2023

(52) Cooperative Patent Classification (CPC):
**B25J 13/00; G05B 19/4093; G05B 19/4155**

(86) International application number:
**PCT/JP2023/038334**

(87) International publication number:
**WO 2024/095827 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 31.10.2022 JP 2022174762

(71) Applicant: Kyocera Corporation
Kyoto-shi, Kyoto 612-8501 (JP)

(72) Inventors:
• MIYAMOTO Takuya
  Kyoto-shi, Kyoto 612-8501 (JP)
• BUNNO Sho
  Kyoto-shi, Kyoto 612-8501 (JP)
• MORI Masato
  Kyoto-shi, Kyoto 612-8501 (JP)
• MIYAMURA Hiroaki
  Kyoto-shi, Kyoto 612-8501 (JP)
• ISHIDA Takayuki
  Kyoto-shi, Kyoto 612-8501 (JP)

(74) Representative: TBK
Bavariaring 4-6
80336 München (DE)

(54) **OPERATION PATH SETTING DEVICE AND PROGRAM**

(57) A motion path setting device includes a priority setter, a determiner, and a path setter. The priority setter sets a use priority of each of a plurality of candidate motion paths. The determiner selects at least one candidate motion path of the plurality of candidate motion paths based on the use priority and performs an interference determination process to determine whether a robot interferes with an obstacle for the selected at least one candidate motion path. The path setter sets a motion path of the robot based on a candidate motion path of the plurality of candidate motion paths on which the robot is determined not to interfere with the obstacle by the determiner.

FIG. 1

**Description**

TECHNICAL FIELD

The present disclosure relates to a technique for setting the motion path of a robot.

BACKGROUND OF INVENTION

Patent Literature 1 describes a technique for motion path planning for a robot.

CITATION LIST

PATENT LITERATURE

Patent Literature 1: Japanese Unexamined Patent Application Publication No. 2000-20117

SUMMARY

One or more aspects of the present disclosure are directed to a motion path setting device and a program. In one embodiment, a motion path setting device includes a priority setter, a determiner, and a path setter. The priority setter sets a use priority of each of a plurality of candidate motion paths. The determiner selects at least one candidate motion path of the plurality of candidate motion paths based on the use priority and performs an interference determination process to determine whether a robot interferes with an obstacle for the selected at least one candidate motion path. The path setter sets a motion path of the robot based on a candidate motion path of the plurality of candidate motion paths on which the robot is determined not to interfere with the obstacle by the determiner.

In one embodiment, a program causes a computer to perform setting a use priority of each of a plurality of candidate motion paths. The program also causes the computer to perform selecting at least one candidate motion path of the plurality of candidate motion paths based on the use priority and performing an interference determination process to determine whether a robot interferes with an obstacle for the selected at least one candidate motion path. The program also causes the computer to perform setting a motion path of the robot based on a candidate motion path of the plurality of candidate motion paths on which the robot is determined not to interfere with the obstacle.

BRIEF DESCRIPTION OF THE DRAWINGS

FIG. 1 is a block diagram of a motion path setting device, illustrating an example structure.

FIG. 2 is a schematic diagram of an example physical workspace.

FIG. 3 is a schematic diagram of a robot, illustrating an example structure.

FIG. 4 is a schematic diagram of the robot with its shape represented by multiple rectangular prisms in an example.

FIG. 5 is a flowchart of an example operation of the motion path setting device.

FIG. 6 is a schematic diagram describing an example method for obtaining a candidate motion path.

FIG. 7 is a schematic diagram describing an example method for obtaining a candidate motion path.

FIG. 8 is a schematic diagram describing an example method for obtaining a candidate motion path.

FIG. 9 is a schematic diagram describing an example method for obtaining a candidate motion path.

FIG. 10 is a schematic diagram describing an example method for obtaining a candidate motion path.

FIG. 11 is a schematic diagram describing an example method for obtaining a candidate motion path.

FIG. 12 is a schematic diagram describing an example operation of a priority setter.

FIG. 13 is a schematic diagram describing an example operation of the priority setter.

FIG. 14 is a schematic diagram describing an example operation of the priority setter.

FIG. 15 is a schematic diagram describing an example operation of the priority setter.

FIG. 16 is a schematic diagram describing an example operation of the priority setter.

FIG. 17 is a schematic diagram describing an example operation of the priority setter.

FIG. 18 is a schematic diagram describing an example operation of the priority setter.

FIG. 19 is a schematic diagram of an example specific area.

FIG. 20 is a schematic diagram describing an example operation of a determiner.

FIG. 21 is a schematic diagram describing an example operation of the determiner.

FIG. 22 is a schematic diagram describing an example operation of the determiner.

FIG. 23 is a schematic diagram describing an example operation of the determiner.

FIG. 24 is a schematic diagram describing an example operation of the determiner.

FIG. 25 is a schematic diagram describing an example operation of the determiner.

FIG. 26 is a schematic diagram of an example configuration space.

FIG. 27 is a schematic diagram describing an example operation of the determiner.

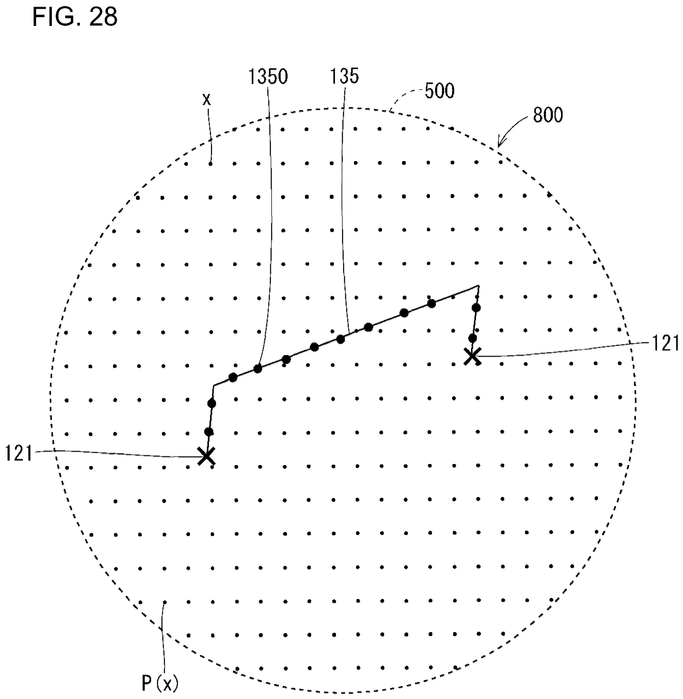

FIG. 28 is a schematic diagram describing an example operation of the priority setter.

DESCRIPTION OF EMBODIMENTS

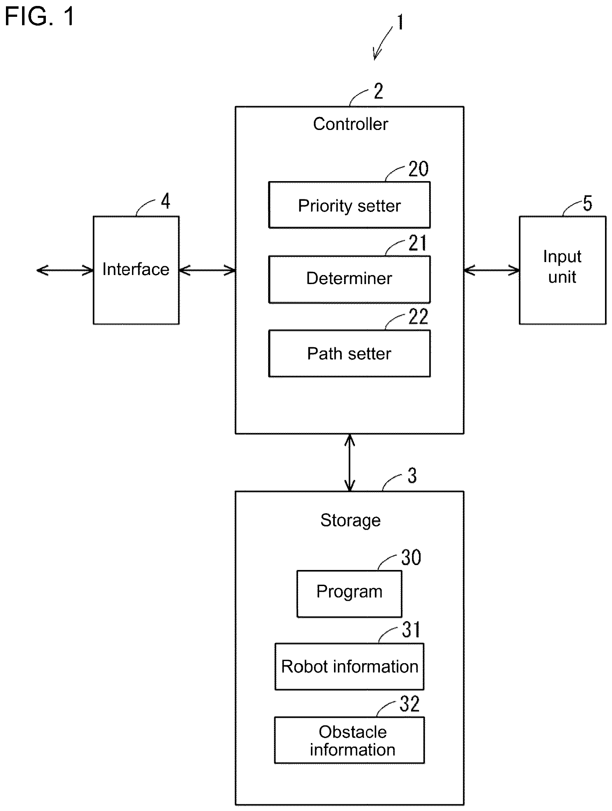

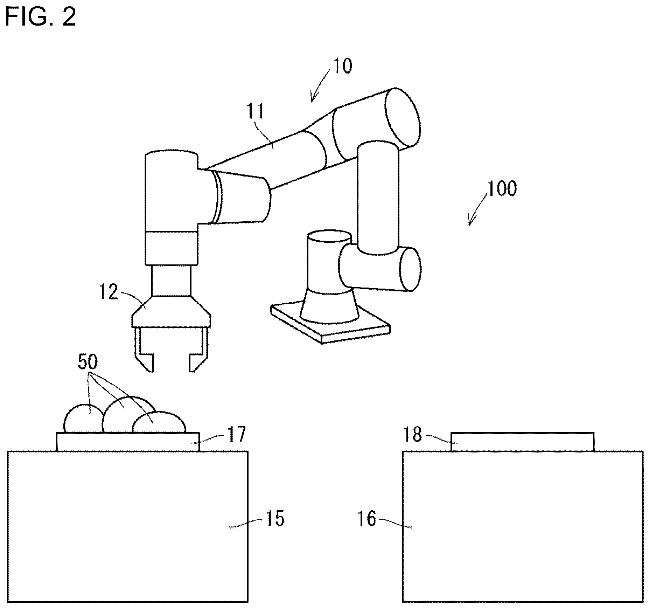

FIG. 1 is a block diagram of a motion path setting device 1 that sets the motion path of a robot 10, illustrating an example structure. FIG. 2 is a schematic diagram of an example physical workspace (also referred to as a work area) 100 in which the robot 10 performs a task. The physical workspace 100 is a multidimensional space. More specifically, the physical workspace 100 is a three-dimensional space.
The robot 10 transfers, for example, a task target object 50 (also simply referred to as a target object 50) from a source area to a destination area in the physical workspace 100. The robot 10 holds the target object 50 in the source area and transfers the target object 50 from the source area to the destination area. For example, the robot 10 holds and transfers the target object 50 from the source area to the destination area by changing the posture of the robot 10. The target object 50 is also referred to as, for example, a workpiece. The posture of the robot 10 is hereafter also referred to as a robot posture.
The source area and the destination area are, for example, trays. A tray 17 as the source area (also referred to as a source tray 17) receives multiple task target objects 50. For example, the robot 10 holds the task target objects 50 on the source tray 17 one by one and transfers the task target objects 50 to a tray 18 as the destination area (also referred to as a destination tray 18). For example, the source tray 17 is on a worktable 15, and the destination tray 18 is on a worktable 16. The worktable 15 may be a starting worktable 15. The worktable 16 may be a destination worktable 16. The robot 10 transfers the target object 50 from the starting worktable 15 to the destination worktable 16.
The robot 10 includes, for example, an arm 11 and a robot hand 12 connected to the arm 11. The robot hand 12 is also referred to as an end-effector. The robot hand 12 can hold the target object 50. For example, the robot hand 12 can grip the target object 50 with two fingers. Such a robot hand 12 is also referred to as a gripper. Note that the structure of the robot hand 12 is not limited to the above example.
The robot 10 holds the target object 50 on the source tray 17 with the robot hand 12. The robot 10 moves the arm 11 with the robot hand 12 holding the target object 50 to transfer the target object 50 to the destination tray 18. For example, the robot 10 transfers the target object 50 to the destination tray 18 by changing the posture of the arm 11. Note that the task performed by the robot 10 is not limited to the above example.

The robot 10 may be, for example, a multi-axis robot. The robot 10 in the present embodiment is, for example, a six-axis robot. The robot 10 has, for example, six movement axes. The robot 10 has, for example, six degrees of freedom. The arm 11 of the robot 10 includes, for example, six joints each movable about the corresponding one of the movement axes. Note that the robot 10 is not limited to the six-axis robot and may be, for example, a seven-axis robot.

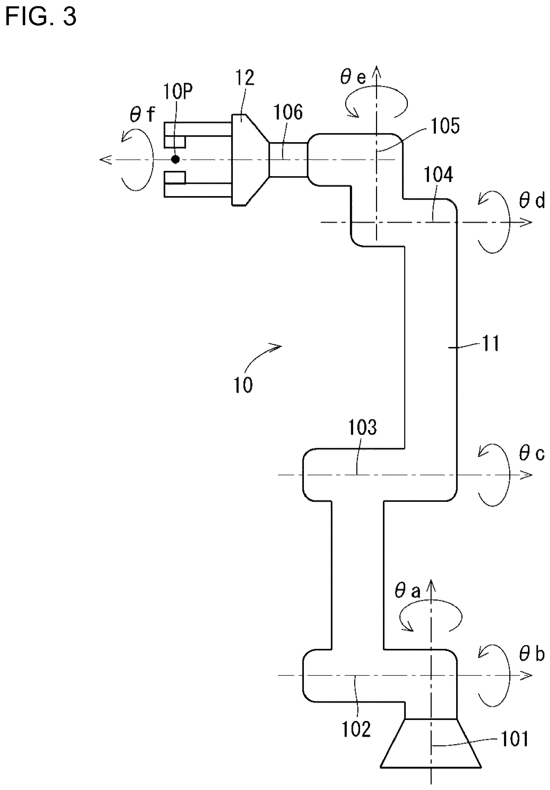

FIG. 3 is a schematic diagram of six movement axes 101, 102, 103, 104, 105, and 106 of the robot 10 in an example. In FIG. 3, the rotation angles of the arm 11 about the movement axes 101, 102, 103, 104, 105, and 106 are respectively indicated by $\theta a$, $\theta b$, $\theta c$, $\theta d$, $\theta e$, and $\theta f$. The rotation angles $\theta a$, $\theta b$, $\theta c$, $\theta d$, $\theta e$, and $\theta f$ are parameters that represent the robot posture. Note that the number of movement axes (in other words, the number of degrees of freedom) of the robot 10 is not limited to the above example. The rotation angles $\theta a$, $\theta b$, $\theta c$, $\theta d$, $\theta e$, and $\theta f$ that represent the robot posture may be hereafter referred to as parameters $\theta a$, $\theta b$, $\theta c$, $\theta d$, $\theta e$, and $\theta f$.

The motion path setting device 1 is, for example, a computer. For example, the motion path setting device 1 can set the motion path of the robot 10, and can also control the robot 10 to move along the set motion path. In other words, the motion path setting device 1 also functions as a robot control device that controls the robot 10. Note that a robot control device that controls the robot 10 may be prepared separately from the motion path setting device 1. In this case, the motion path set by the motion path setting device 1 is provided to the robot control device. The robot control device controls the robot 10 to move along the provided motion path. The motion path hereafter refers to the motion path of the robot 10.

As illustrated in FIG. 1, the motion path setting device 1 includes, for example, a controller 2, a storage 3, an interface 4, and an input unit 5. The motion path setting device 1 may be, for example, a motion path setting circuit.

The interface 4 can transmit and receive a signal to and from the robot 10. The controller 2 can control the robot 10 through the interface 4. The interface 4 may be, for example, an interface circuit. Note that, when a robot control device that controls the robot 10 is prepared separately from the motion path setting device 1, the motion path setting device 1 may include an interface to transmit and receive a signal to and from the robot control device, in place of the interface 4.

The controller 2 can control other components of the motion path setting device 1 to centrally manage the operation of the motion path setting device 1. The controller 2 may be, for example, a control circuit. The controller 2 includes at least one processor that performs control and processing for implementing various functions, as described in more detail below.

In various embodiments, the processor may be a single integrated circuit (IC), or multiple ICs, multiple discrete circuits, or both these circuits connected to one another for mutual communication. The processor may be implemented using any of various known techniques.

In one embodiment, the processor includes one or more circuits or units configured to perform one or more data computation procedures or processes by, for example, executing instructions stored in an associated memory. In another embodiment, the processor may be firmware (e.g., a discrete logic component) configured to perform one or more data computation procedures or processes.

In various embodiments, the processor includes one or more processors, controllers, microprocessors, microcontrollers, application-specific integrated circuits (ASICs), digital signal processors (DSPs), programmable logic devices, field programmable gate arrays, combinations of any of these devices or configurations, or combinations of other known devices and configurations. The processor may perform the functions described below.

The controller 2 may include, for example, a central processing unit (CPU) as the processor. The storage 3 may include a non-transitory recording medium readable by the CPU in the controller 2, such as a read-only memory (ROM) and a random-access memory (RAM). The storage 3 stores, for example, a program 30 for controlling the motion path setting device 1. Various functions of the controller 2 are implemented by, for example, the CPU in the controller 2 executing the program 30 in the storage 3.

The storage 3 stores, for example, robot information 31 and obstacle information 32 used to set the motion path, in addition to the program 30. The robot information 31 is information about the robot 10. The robot information 31 includes, for example, information indicating the shape of the robot 10. The obstacle information 32 is information about an obstacle that obstructs the motion of the robot 10 performing a task. The obstacle information 32 includes, for example, information indicating the position of the obstacle, information indicating the shape of the obstacle, and information indicating the size of the obstacle. The obstacle includes at least one object located in the physical workspace 100. The obstacle includes, for example, the worktable 15, the worktable 16, the tray 17, and the tray 18. The obstacle may include an object other than the worktable 15, the worktable 16, the tray 17, and the tray 18. For example, the obstacle may include at least one of a structure such as a wall or a pole, a chair, a desk, a shelf, a screen, or an illuminator.

Note that the structure of the controller 2 is not limited to the above example. For example, the controller 2 may include multiple CPUs. The controller 2 may include at least one DSP. The functions of the controller 2 may be implemented entirely or partially by a hardware circuit, without using software to implement the functions. The storage 3 may include a non-transitory computer-readable recording medium other than the ROM and the RAM. The storage 3 may include, for example, a small hard disk drive and a solid-state drive (SSD).

The input unit 5 can receive various inputs from a user. The input unit 5 may include, for example, a mouse and a keyboard. The input unit 5 may include a touch sensor that receives touch operations performed by the user. In this case, the motion path setting device 1 may include a display such as a liquid crystal display, and the display and the touch sensor may together serve as a touchscreen display that performs display and detects a touch. The input unit 5 may include a microphone that receives a voice input from the user. The controller 2 identifies the user input received by the input unit 5 based on an output signal from the input unit 5.

The controller 2 includes, for example, a priority setter 20, a determiner 21, and a path setter 22. For example, the CPU in the controller 2 executes the program 30 in the storage 3 to implement, as functional blocks, the priority setter 20, the determiner 21, and the path setter 22 in the controller 2. Note that the functions of the priority setter 20 may be implemented entirely or partially by a hardware circuit, without using software to implement the functions. The determiner 21 and the path setter 22 also have the same or a similar structure.

The priority setter 20 performs a priority setting process to set the use priority of each of multiple candidate motion paths of the robot 10. The determiner 21 performs a selection process to select at least one of the multiple candidate motion paths based on the use priority and perform an interference determination process to determine whether the robot 10 interferes with an obstacle 60 for the selected candidate motion path. The path setter 22 performs a path setting process to set the motion path of the robot 10 based on a candidate motion path on which the robot 10 is determined not to interfere with an obstacle by the determiner 21. The multiple candidate motion paths may be obtained by the controller 2 or may be specified by the user through the input unit 5.

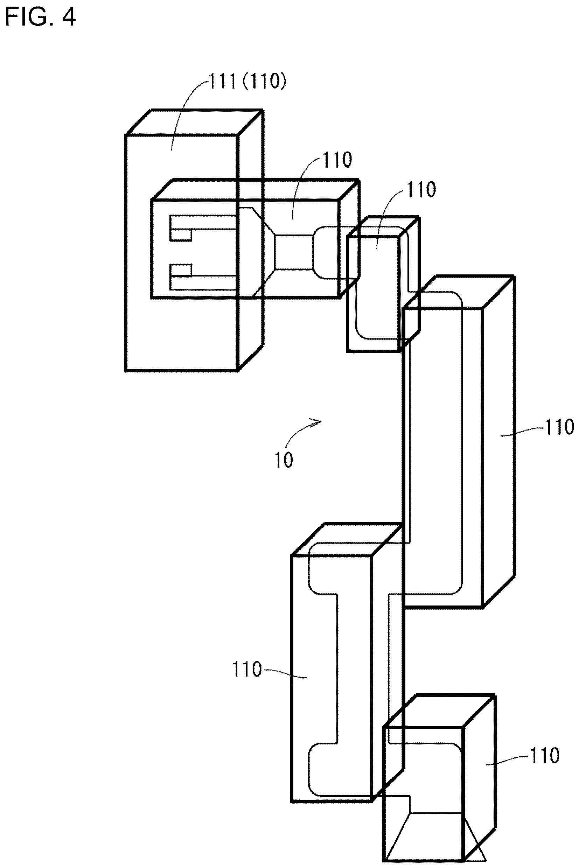

In the interference determination process performed by the determiner 21, the determiner 21 determines whether the robot 10 interferes with an obstacle and also determines, for example, whether the target object 50 held by the robot 10 interferes with an obstacle. The determiner 21 may perform the interference determination process based on, for example, the approximated shapes of the robot 10 and the obstacle. As illustrated in FIG. 4, the shape of the robot 10 is approximated by, for example, multiple (e.g., five) rectangular prisms 110. The shape of the arm 11 of the robot 10 is approximated by, for example, four rectangular prisms 110. The shape of the robot hand 12 is approximated by, for example, a single rectangular prism 110. The shape of the target object 50 is also approximated by, for example, a single rectangular prism 111.

In this example, the interference determination process is performed for the robot 10 including the target object 50 held by the robot 10. More specifically, in the interference determination process, the target object 50 held by the robot 10 is treated as a part of the robot 10 in determining whether the robot 10 interferes with an obstacle. Unless otherwise specified, the robot 10 hereafter refers to the robot 10 and the target object 50 held by the robot 10. The robot 10 alone refers to the robot 10 excluding the target object 50. In other words, the robot 10 alone refers to the robot 10 without holding the target object 50. The rectangular prism 111 representing the shape of the target object 50 may be referred to as a rectangular prism 110. In the example in FIG. 4, the shape of the robot 10 is represented by six rectangular prisms 110. The robot information 31 in the storage 3 includes information indicating the positional relationship between the six rectangular prisms 110 representing the shape of the robot 10 and information indicating the shape of each of the six rectangular prisms 110. The controller 2 can identify the shape of the robot 10 based on the robot information 31.

The shape of the obstacle is approximated by, for example, at least one rectangular prism. When, for example, the obstacle includes multiple objects, the shape of the obstacle is approximated by multiple rectangular prisms. The obstacle information 32 stored in the storage 3 includes information indicating the position and the shape of at least one rectangular prism representing the shape of the obstacle. The controller 2 can identify the position, the shape, and the size of the obstacle based on the obstacle information 32.

Operation examples of the priority setter 20, the determiner 21, and the path setter 22 will now be described in detail.

Operation Examples of Priority setter, Determiner, and Path Setter

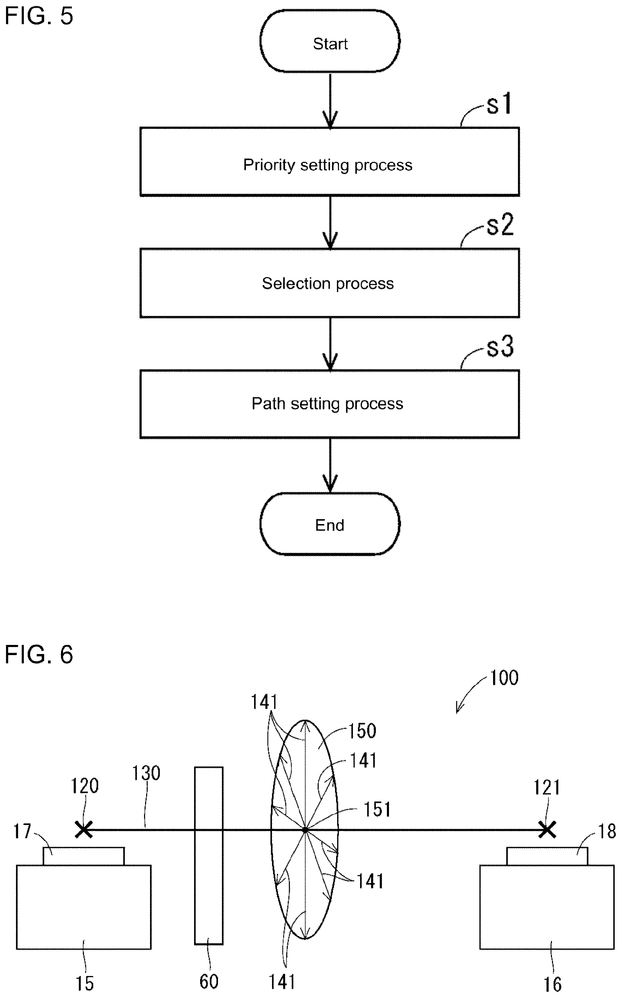

FIG. 5 is a flowchart of an example motion path setting process performed by the controller 2 to set the motion path of the robot 10. The motion path setting process will be described briefly first, and then described in detail. A candidate motion path in focus (in other words, a candidate motion path to be described) may be hereafter referred to as a focused candidate motion path.

As illustrated in FIG. 5, the priority setting process is performed in step s1. In step s1, the priority setter 20 sets the use priority of each of A candidate motion paths (A is an integer greater than or equal to 2).

In step s2, the selection process is performed. In step s2, the determiner 21 selects at least one of the A candidate motion paths based on the use priority set in step s1. The determiner 21 performs the interference determination process for the selected candidate motion path.

In step s2, the determiner 21 may perform the interference determination process selectively for the candidate motion path of the A candidate motion paths selected based on the use priority. In step s2, the determiner 21 may instead perform the interference determination process for one or more of the A candidate motion paths selected in the order based on the use priority. The interference determination process performed by the determiner 21 selectively for the candidate motion path of the A candidate motion paths selected based on the use priority may be hereafter referred to as a partial selection process. The interference determination process performed by the determiner 21 for one or more of the A candidate motion paths selected in the order based on the use priority may be referred to as an ordering process.

In the ordering process, the determiner 21 determines the order in which the interference determination process is performed for the A candidate motion paths based on the use priority. More specifically, the determiner 21 determines the order in which the interference determination process is performed for each of the A candidate motion paths based on the use priority. For example, the determiner 21 assigns the order in which the interference determination process is performed for each of the A candidate motion paths to cause a candidate motion path with a higher use priority to have an earlier order in which the interference determination process is performed. The determiner 21 performs the interference determination process for the candidate motion path assigned with the earliest order (in other words, the candidate motion path with the highest use priority) among the A candidate motion paths. When the robot is determined not to interfere with an obstacle in the interference determination process for the candidate motion path assigned with the earliest order, step s3 is performed. When the robot is determined to interfere with an obstacle in the interference determination process for the candidate motion path assigned with the earliest order, the determiner 21 performs the interference determination process for the candidate motion path assigned with the second earliest order (in other words, the candidate motion path with the second highest use priority) among the A candidate motion paths. When the robot is determined not to interfere with an obstacle in the interference determination process for the candidate motion path assigned with the second earliest order, step s3 is performed. When the robot is determined to interfere with an obstacle in the interference determination process for the candidate motion path assigned with the second earliest order, the determiner 21 performs the interference determination process for the candidate motion path assigned with the third earliest order among the A candidate motion paths. The determiner 21 thereafter operates in the same manner as or in a similar manner to the above.

In the partial selection process, the determiner 21 selects, for example, B candidate motion paths with higher use priorities (B is an integer greater than or equal to 1) from the A candidate motion paths. As in the ordering process, the determiner 21 performs the interference determination process for the B candidate motion paths selected in the order based on the use priority. The determiner 21 does not perform the interference determination process for the candidate motion paths other than the selected B candidate motion paths among the A candidate motion paths.

Note that, in the partial selection process, the determiner 21 may select one of the selected B candidate motion paths without using the use priority. In this case, when the determiner 21 determines that the robot 10 interferes with an obstacle on the selected candidate motion path, the determiner 21 may select another one of the B candidate motion paths without using the use priority, and may perform the interference determination process for the selected candidate motion path. The determiner 21 may repeatedly perform the above process until finding a candidate motion path on which the robot 10 does not interfere with an obstacle.

In step s3, the path setting process is performed. In step s3, the path setter 22 sets the motion path of the robot 10 based on one candidate motion path on which the robot 10 is determined not to interfere with an obstacle in step s2. For example, the path setter 22 may directly set, as the motion path of the robot 10, the candidate motion path on which the robot 10 is determined not to interfere with an obstacle in step s2. The determiner 21 may instead set, as the motion path of the robot 10, a path obtained by deforming the candidate motion path. Note that, for the deformed candidate motion path, the determination as to whether the robot 10 interferes with an obstacle may be performed again.

The motion path setting device 1 controls the robot 10 to move along the motion path set in the motion path setting process illustrated in FIG. 5. More specifically, after the path setter 22 sets the motion path of the robot 10, the controller 2 sets the motion of the robot 10 on the motion path that has been set (also referred to as a set motion path) based on the set motion path. For example, the controller 2 sets the motion of each of the joints of the arm 11 on the set motion path. More specifically, the motion of the robot 10 can be set by determining, for each of multiple points representing the set motion path, the time taken to reach the point and the posture of the robot at the point.

Note that the controller 2 may set an interpolation curve interpolating the motion between the multiple points representing the set motion path. The interpolation curve may be, for example, a spline curve or any other curve. The controller 2 sets multiple points on the set interpolation curve. The controller 2 uses the multiple points representing the set motion path and the multiple points representing the interpolation curve as final motion points representing the motion of the robot 10. Using these final motion points, the controller 2 generates motion data indicating the set motion of each of the joints of the robot 10, and can thus set the motion of the robot 10.

As described above, the robot 10 holds and transfers, for example, the target object 50 from the source tray 17 to the destination tray 18. The motion path setting device 1 then performs the motion path setting process illustrated in FIG. 5 again to reset the motion path of the robot 10. The motion path setting device 1 then controls the robot 10 to move along the reset motion path. This transfers another target object 50 from the source tray 17 to the destination tray 18. The motion path setting device 1 thereafter operates in the same manner as or in a similar manner to the above. The motion path setting device 1 may perform the motion path setting process every time the robot 10 transfers a target object 50 from the source tray 17 to the destination tray 18.

Examples of Multiple Candidate Motion Paths

The controller 2 obtaining A candidate motion paths will now be described. **In** this case, the controller 2 functions as a candidate obtainer that obtains candidate motion paths. Note that the A candidate motion paths may be specified by the user.

The controller 2 can obtain A candidate motion paths of, for example, a predetermined portion 10P of the robot 10 in the physical workspace 100. As illustrated in FIG. 3, the predetermined portion 10P is set at, for example, the distal end of the robot 10 alone, or specifically, the distal end of the robot hand 12. In this case, a candidate motion path obtained by the controller 2 may refer to a candidate for the motion path of the distal end of the robot 10 alone. In the example in FIG. 3, the predetermined portion 10P is set at, for example, an intermediate point on the movement axis 106 between the two fingers of the robot hand 12.

FIG. 6 is a schematic diagram describing an operation example of the controller 2. As illustrated in FIG. 6, the controller 2 can obtain, for example, A candidate motion paths from a starting point 120 to an ending point 121 of the motion of the robot 10 in the physical workspace 100 based on a reference path (also referred to as a tentative motion path) 130 that is the shortest path connecting the starting point 120 and the ending point 121. The reference path 130 is indicated by a line segment connecting the starting point 120 and the ending point 121. FIG. 6 schematically illustrates the obstacle 60 located in the physical workspace 100 in an example.

The starting point 120 of the motion of the robot 10 in the physical workspace 100 indicates, for example, the position of the robot 10 at the time when the robot 10 holding the target object 50 starts a transfer motion to transfer the target object 50 to the tray 18. The starting point 120 indicates, for example, the position of the predetermined portion 10P of the robot 10 at the time when the robot 10 starts the transfer motion. The ending point 121 of the robot motion in the physical workspace 100 indicates, for example, the position of the robot 10 at the time when the robot 10 ends the transfer motion. The ending point 121 indicates, for example, the position of the predetermined portion 10P of the robot 10 at the time when the robot 10 ends the transfer motion. The line connecting the starting point 120 and the ending point 121 indicates the change in the position of the predetermined portion 10P of the robot 10 from the start to the end of the transfer motion. In other words, the line connecting the starting point 120 and the ending point 121 indicates the trajectory of positions of the predetermined portion 10P of the robot 10 from the start to the end of the transfer motion. In step s3 in FIG. 5 described above, for example, one candidate motion path connecting the starting point 120 and the ending point 121 is set as the motion path of the robot 10. The motion path of the robot 10 set by the path setter 22 in the physical workspace 100 indicates the change in the position (in other words, the trajectory of positions) of the predetermined portion 10P of the robot 10.

The starting point 120 is set at, for example, a position immediately above the tray 17 and slightly spaced from the tray 17. The ending point 121 is set at, for example, a position immediately above the tray 18 and slightly spaced from the tray 18. Note that the starting point 120 may be set in the tray 17. The ending point 121 may be set in the tray 18.

The reference path 130 may be the shortest motion path of the predetermined portion 10P of the robot 10 from the starting point 120 to the ending point 121. The controller 2 may obtain A candidate motion paths by, for example, shifting the reference path 130. The controller 2 may obtain A candidate motion paths by, for example, parallelly shifting the reference path 130. The controller 2 may obtain A candidate motion paths by, for example, parallelly shifting the reference path 130 in a first direction 141 orthogonal to the reference path 130. In this example, multiple first directions 141 orthogonal to the reference path 130 are set. The controller 2 parallelly shifts the reference path 130 in the respective first directions 141 to obtain A candidate motion paths.

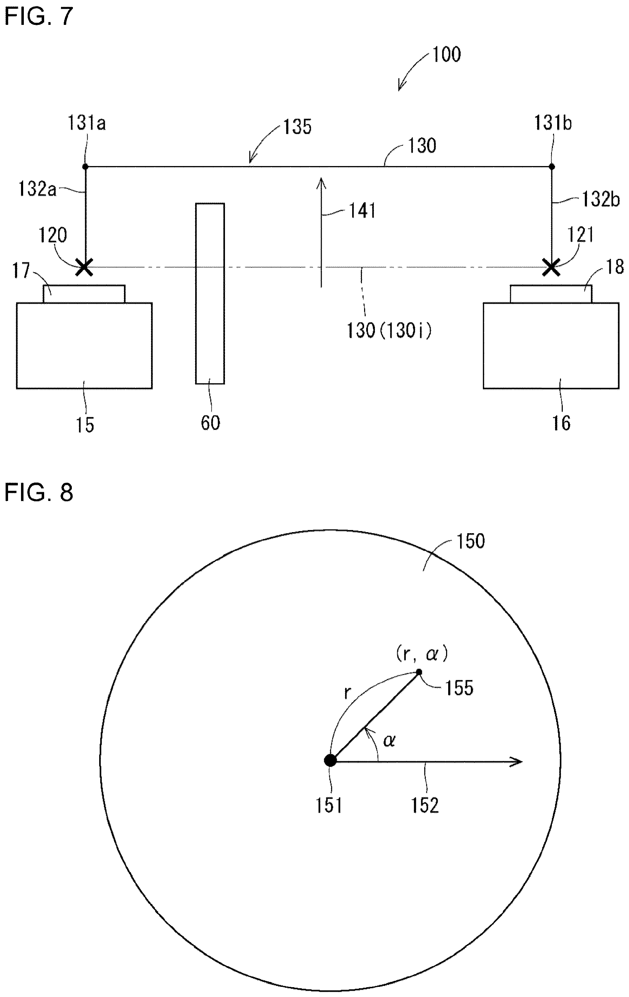

To obtain a candidate motion path by shifting the reference path 130, the controller 2 connects, with a linear path 132a, the starting point 120 to an end 131a of the reference path 130 that has been shifted as illustrated in FIG. 7. The end 131a is one of two ends 131a and 131b of the shifted reference path 130 corresponding to the starting point 120 on the reference path 130 at its initial position. The initial position of the reference path 130 refers to the position of the reference path 130 before being shifted, or in other words, the position of the reference path 130 connecting the starting point 120 and the ending point 121. The controller 2 also connects the ending point 121 to the end 131b with a linear path 132b. The end 131b is one of the two ends 131a and 131b corresponding to the ending point 121 on the reference path 130 at its initial position. Each of the linear paths 132a and 132b is indicated by a line segment. The controller 2 obtains, as one candidate motion path 135, a path from the starting point 120 to the ending point 121 including the shifted reference path 130, the linear path 132a, and the linear path 132b. In other words, the controller 2 obtains, as one candidate motion path 135, a path including the shifted reference path 130 with its one end and the other end respectively connected to the starting point 120 and the ending point 121. One candidate motion path 135 is indicated by the line connecting the starting point 120 and the ending point 121. In FIG. 7, the two-dot-dash line indicates the reference path 130 before being shifted, or in other words, the reference path 130 at the initial position connecting the starting point 120 and the ending point 121. The reference path 130 at the initial position (initial-position reference path 130) may be hereafter referred to as an initial-position reference path 130i.

In this example, as illustrated in FIG. 6, an imaginary plane 150 orthogonal to the reference path 130 is set. In the example in FIG. 6, the outline of the plane 150 is circular, but may be square or in any other shape. The controller 2 obtains one candidate motion path 135 by parallelly shifting the reference path 130 in the first direction 141 to cause the reference path 130 to pass through a waypoint on the plane 150, as in the example in FIG. 7. To obtain a new candidate motion path 135, the controller 2 changes the position of the waypoint on the plane 150. The controller 2 then parallelly shifts the reference path 130 in the first direction 141 to cause the reference path 130 to pass through the waypoint at the changed position to obtain a new candidate motion path 135.

FIG. 8 is a schematic diagram describing an example method for setting the position of a waypoint 155 on the plane 150. The position of the waypoint 155 on the plane 150 is expressed in, for example, polar coordinates. As illustrated in FIG. 8, a starting line 152 extending from an intersection 151 between the plane 150 and the reference path 130 is set on the plane 150. The starting line 152 is perpendicular to the reference path 130. The position of the waypoint 155 on the plane 150 is indicated by, for example, a pair $(r, \alpha)$, where r is the distance from the intersection 151 to the waypoint 155, and $\alpha$ is the argument from the starting line 152 to the waypoint 155. The distance r and the argument $\alpha$ are variables.

The controller 2 can change the position $(r, \alpha)$ of the waypoint 155 by changing the combination of setting values for the distance r and the argument $\alpha$. With the position $(r, \alpha)$ of the waypoint 155 being changed, the candidate motion path 135 to be obtained is changed. Thus, the controller 2 can obtain multiple candidate motion paths 135 by changing the combination of the setting values for the distance r and the argument $\alpha$.

The first direction 141 in which the reference path 130 is parallelly shifted is determined by the argument $\alpha$. The first direction 141 in which the reference path 130 is parallelly shifted has the argument $\alpha$ from the starting line 152 to the first direction 141. The reference path 130 is shifted in the first direction 141 with the argument $\alpha$ from the starting line 152 to the first direction 141. The distance by which the reference path 130 is shifted is determined by the distance r. The reference path 130 is parallelly shifted by the distance r.

For example, the controller 2 changes the value of the argument $\alpha$ in steps of a predetermined angle that is greater than or equal to 0 degrees and smaller than 360 degrees. The predetermined angle may be 10 degrees, 1 degree, or any other degrees. The predetermined angle may be set as appropriate for, for example, the length of the shortest one of the sides of the six rectangular prisms 110 representing the shape of the robot 10.

The controller 2 changes, for example, the value of the distance r in steps of a predetermined distance within a predetermined range. The lower limit of the predetermined range is set to, for example, greater than 0. The upper limit of the predetermined range may be set as appropriate for, for example, the size of the physical workspace 100. The upper limit of the predetermined range may instead be set as appropriate for, for example, the length of the longest one of the sides of at least one rectangular prism representing the shape of the obstacle 60. The predetermined distance may be set as appropriate for, for example, the length of the shortest one of the sides of the six rectangular prisms 110 representing the shape of the robot 10.

In this example, U1 setting values (U1 is an integer greater than or equal to 2) are prepared as the setting values for the argument $\alpha$, and U2 setting values (U2 is an integer greater than or equal to 2) are prepared as the setting values for the distance r. In this case, $(U1 \times U2)$ combinations of the setting values for the distance r and the argument $\alpha$ are settable. The controller 2 can thus set $(U1 \times U2)$ waypoints 155 on the plane 150. The controller 2 can thus obtain $(U1 \times U2)$ candidate motion paths. In this example, $A = U1 \times U2$.

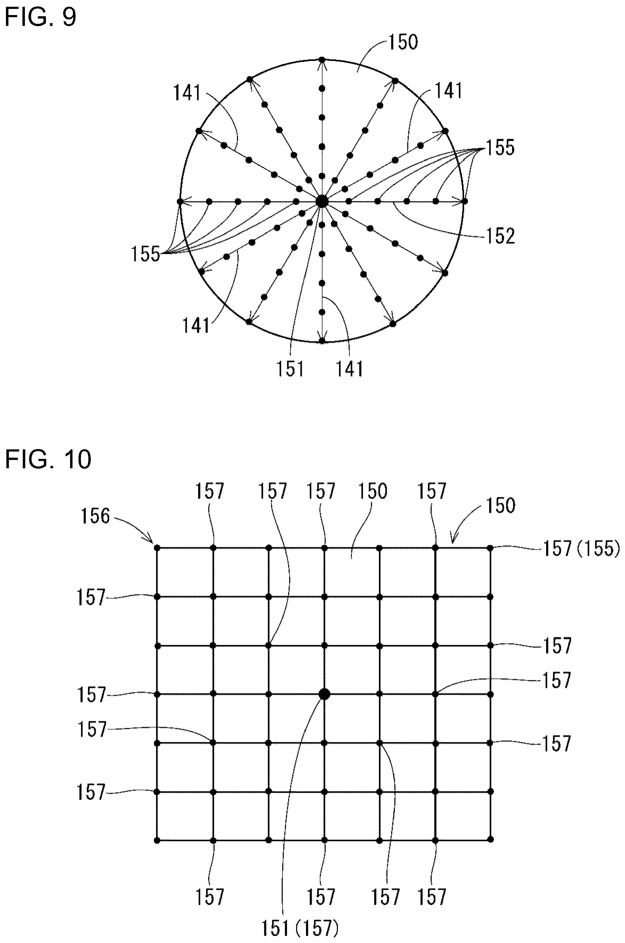

FIG. 9 is a schematic diagram of $(U1 \times U2)$ waypoints 155 in an example. In the example in FIG. 9, U1 = 12, and U2 = 5. In the example in FIG. 9, the setting values prepared for the argument $\alpha$ are 0, 30, 60, 90, 120, 150, 180, 210, 240, 270, 300, and 330 degrees.

Note that the initial-position reference path 130, or specifically, the shortest reference path 130 connecting the starting point 120 and the ending point 121 may be used as one candidate motion path 135. The initial-position reference path 130 may refer to the reference path 130 passing through the waypoint 155 when r = 0.

The position of the waypoint 155 is expressed in polar coordinates in the above example, but may be set in any other manner. FIG. 10 is a schematic diagram describing another example method for setting the position of the waypoint 155.

As illustrated in FIG. 10, for example, the controller 2 sets a grid 156 (also referred to as grid lines 156) on a square plane 150 to split the plane 150 in a grid pattern. For example, the grid 156 is set on the plane 150 to have the center aligned with the intersection 151 between the plane 150 and the reference path 130.

The controller 2 can set each of multiple grid points 157 on the grid 156 as a waypoint 155. The multiple grid points 157 on the grid 156 serve as multiple waypoints 155 that are settable on the plane 150. The multiple grid points 157 may include the intersection 151 as illustrated in FIG. 10, or may not include the intersection 151. The controller 2 can change the candidate motion path 135 to be obtained by changing the grid point 157 to be set as a waypoint 155. The controller 2 can obtain as many candidate motion paths as the multiple grid points 157. In this example, the value A is equal to the number of grid points 157. When the multiple grid points 157 include the intersection 151, the initial-position reference path 130i can be used as one candidate motion path 135.

Note that the candidate motion path is not limited to the above example. For example, the A candidate motion paths may include a candidate motion path obtained by parallelly shifting the reference path 130 in a second direction parallel to the reference path 130 (a lateral direction in FIGs. 6 and 7), in addition to the first direction 141. The A candidate motion paths may include a candidate motion path obtained by rotationally shifting the reference path 130. In this case, the A candidate motion paths may include a candidate motion path obtained by rotationally shifting the reference path 130 about, for example, the rotation axis perpendicular to the initial-position reference path 130i. The A candidate motion paths may include a candidate motion path obtained by both parallelly and rotationally shifting the reference path 130.

The A candidate motion paths may include a candidate motion path obtained by deforming the reference path 130, in addition to or in place of a candidate motion path obtained by shifting the reference path 130. In this case, the A candidate motion paths may include a candidate motion path obtained by deforming the reference path 130 into a curve such as a Bézier curve, a spline curve, or a quadratic curve. The A candidate motion paths may include a candidate motion path obtained by both shifting and deforming the reference path 130. The A candidate motion paths may not include a candidate motion path obtained by parallelly shifting the reference path 130 in the first direction 141 as illustrated in FIG. 7.

When the end 131a of a path obtained by at least shifting or deforming the reference path 130 is not connected to the starting point 120, the end 131a and the starting point 120 are connected to each other with the linear path 132a as in the example in FIG. 7. This creates a candidate motion path including the linear path 132a and the path obtained by at least shifting or deforming the reference path 130. When the end 131b of the path obtained by at least shifting or deforming the reference path 130 is not connected to the ending point 121, the end 131b and the ending point 121 are connected to each other with the linear path 132b as in the example in FIG. 7. This creates a candidate motion path including the linear path 132b and the path obtained by at least shifting or deforming the reference path 130. A candidate motion path may be set without using the reference path 130.

Example Interference Determination Process

When the predetermined portion 10P of the robot 10 is placed at a position on the focused candidate motion path (also referred to as a focused position), the determiner 21 determines whether the robot 10 interferes with the obstacle 60 on the focused candidate motion path. In this example, the posture of the robot 10 is determined uniquely based on the position of the predetermined portion 10P of the robot 10. The robot information 31 in the storage 3 includes information for identifying the posture of the robot 10 corresponding to each position of the predetermined portion 10P of the robot 10 in the physical workspace 100. The determiner 21 identifies, based on the robot information 31, the posture and the shape of the robot 10 with the predetermined portion 10P of the robot 10 placed at the focused position on the focused candidate motion path. The determiner 21 also identifies the position and the shape of the obstacle 60 based on the obstacle information 32 in the storage 3. The determiner 21 determines whether the robot 10 interferes with the obstacle 60 when the predetermined portion 10P of the robot 10 is at the focused position on the focused candidate motion path based on the posture and the shape of the robot 10 with the predetermined portion 10P at the focused position on the focused candidate motion path and based on the position and the shape of the obstacle 60.

The controller 2 determines whether the robot 10 interferes with the obstacle 60 when the predetermined portion 10P of the robot 10 is placed at each position on the focused candidate motion path from the starting point 120 to the ending point 121. When the determiner 21 determines that the robot 10 does not interfere with the obstacle 60 at any position on the focused candidate motion path, the determiner 21 determines that the robot 10 does not interfere with the obstacle on the focused candidate motion path. When the determiner 21 determines that the robot 10 interferes with the obstacle 60 with the predetermined portion 10P placed at any position on the focused candidate motion path, the determiner 21 determines that the robot 10 interferes with the obstacle on the focused candidate motion path.

A candidate motion path on which the robot 10 is determined not to interfere with the obstacle 60 may be hereafter referred to as a candidate non-interference path. A candidate motion path on which the robot 10 is determined to interfere with the obstacle 60 may be referred to as a candidate interference path.

As described above, in this example, the determiner 21 selects at least one of the multiple candidate motion paths based on the use priority of each of the candidate motion paths and performs the interference determination process for the selected candidate motion path. This allows more efficient setting of the motion path of the robot 10 than when the interference determination process is performed for each of the multiple candidate motion paths without distinguishing the candidate motion paths from one another.

Example Method for Setting Use Priority

The priority setter 20 sets, for example, a specific potential field in the physical workspace 100. Note that the potential field may be set within the motion range of the robot 10. The specific potential field is, for example, a three-dimensional potential field. The specific potential field includes multiple potentials. Multiple positions x each having a potential are set in the physical workspace 100. The multiple positions x are three-dimensionally set across the entire the physical workspace 100. A position x in the physical workspace 100 has a potential $P(x)$ indicating the degree of acceptability for the robot 10 to pass through the position x in the physical workspace 100. In this example, a position x with a greater potential P(x) indicates a higher degree of acceptability for the robot 10 to pass through the position x. Thus, in this example, the motion path of the robot 10 is to pass through the position x with a greater potential P(x) in the physical workspace 100. The potential P(x) at a position x in the physical workspace 100 may indicate the degree of acceptability for the robot 10 to pass through the position x. An example method for setting the potential P(x) will be described later.

The priority setter 20 sets the use priority of a candidate motion path based on, for example, the specific potential field. For example, the priority setter 20 sets the use priority of the focused candidate motion path based on the specific potential field and an area in the physical workspace 100 occupied by the robot 10 (also referred to as a robot area) in each of multiple robot postures on the focused candidate motion path. The priority setter 20 can identify a robot area 115 for each of the multiple robot postures on the candidate motion path 135 based on the robot information 31 in the storage 3. A specific example method for setting, with the priority setter 20, the use priority of a candidate motion path based on the specific potential field will now be described. The posture of the robot 10 in focus may be hereafter referred to as a focused posture or a focused robot posture.

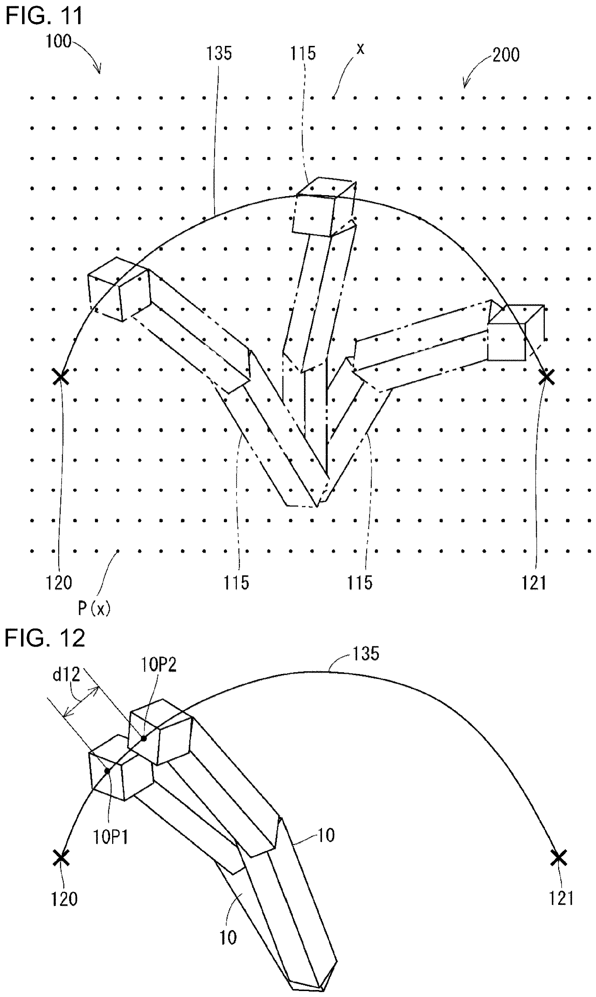

FIG. 11 is a schematic diagram illustrating robot areas 115 for multiple robot postures on the focused candidate motion path 135 superimposed on a specific potential field 200. For ease of explanation, the multiple positions x in the specific potential field 200 are arranged two-dimensionally in FIG. 11. In FIG. 11, the robot areas 115 are indicated by two-dot-dash lines.

The priority setter 20 calculates, as a first summation, the summation of potentials P(x) at the multiple positions x included in the robot area 115 of the robot 10 in the focused posture on the focused candidate motion path 135. In other words, the priority setter 20 calculates, as the first summation, the summation of the potentials P(x) at the multiple positions x included in the robot area 115 of the robot 10 in the focused posture at the time when the robot 10 moves along the focused candidate motion path 135. In still other words, the priority setter 20 calculates, as the first summation, the summation of the potentials P(x) at the multiple positions x included in the robot area 115 of the robot in the focused posture at the time when the predetermined portion 10P of the robot 10 moves along the focused candidate motion path 135. The first summation refers to the summation of the potentials P(x) at the multiple positions x included in a single robot area 115 illustrated in FIG. 11. The first summation for the focused posture may refer to the degree of acceptability for the robot 10 to take the focused posture (degree of posture acceptability). In other words, a focused posture with a greater first summation indicates that the focused posture has a greater degree of posture acceptability. The first summation for a robot posture may refer to the degree of posture acceptability of the robot posture.

The priority setter 20 calculates the first summation for each of multiple robot postures on the focused candidate motion path. In other words, the priority setter 20 calculates the first summation for each of the multiple robot postures at the time when the robot 10 moves along the focused candidate motion path. The priority setter 20 sets the use priority of the focused candidate motion path based on the summation of the first summations calculated for the multiple robot postures. The summation of the first summations calculated for the multiple robot postures is referred to as a second summation. The second summation calculated for a candidate motion path indicates the use priority of the candidate motion path. A candidate motion path with a greater second summation indicates that the candidate motion path has a higher use priority. In this example, the priority setter 20 sets the use priority of a candidate motion path by calculating the second summation for the candidate motion path. Among the A candidate motion paths, the candidate motion path with the greatest second summation is the candidate motion path with the highest use priority. The second summation may be hereafter referred to as a potential evaluation value.

In the partial selection process, the determiner 21 may select B candidate motion paths having potential evaluation values greater than or equal to a threshold from the A candidate motion paths. In the ordering process, the determiner 21 may assign the order in which the interference determination process is performed for each of the A candidate motion paths to cause a candidate motion path with a greater potential evaluation value to have an earlier order in which the interference determination process is performed.

The multiple robot postures on one candidate motion path 135, for which the priority setter 20 calculates the first summations, are each referred to as a target robot posture. Two target robot postures that are temporally adjacent to each other are referred to as a first target robot posture and a second target robot posture. The two target robot postures that are temporally adjacent to each other refer to a target robot posture and the next target robot posture of the robot 10 moving along one candidate motion path 135. The predetermined portion 10P of the robot 10 in the first target robot posture is referred to as a first predetermined portion 10P1. The predetermined portion 10P of the robot 10 in the second target robot posture is referred to as a second predetermined portion 10P2.

FIG. 12 is a schematic diagram of the robot 10 in the first target robot posture and the second target robot posture that are temporally adjacent to each other in an example. Multiple target robot postures on one candidate motion path 135, for which the first summations are calculated, may have a distance d12 (refer to FIG. 12) less than or equal to a predetermined value between the first predetermined portion 10P1 and the second predetermined portion 10P2. The predetermined value may be, for example, equal to the length of the shortest one of the sides of the rectangular prisms 110 representing the shape of the robot hand 12, or may be less than such a length. This can appropriately evaluate the use priority of the candidate motion path 135 based on the multiple first summations calculated for the respective target robot postures. In other words, the potential evaluation value (or the summation of the multiple first summations) obtained for the candidate motion path 135 can more accurately indicate the use priority of the candidate motion path 135.

In this manner, the priority setter 20 can appropriately set the use priority of the candidate motion path 135 based on the specific potential field, in which each position x has the potential P(x) indicating the degree of acceptability for the robot 10 to pass through the position x. This allows efficient setting of the motion path of the robot 10.

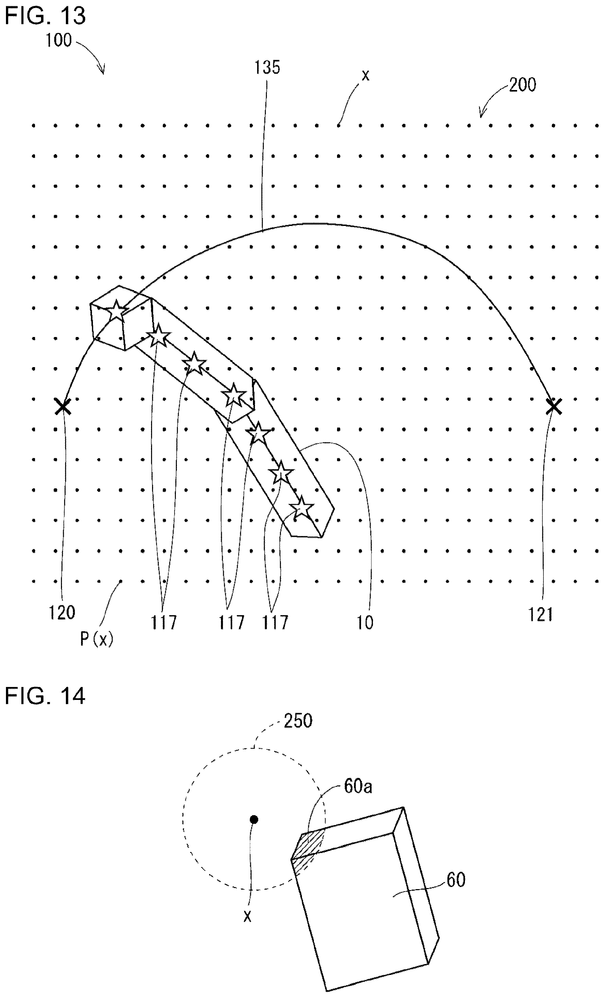

Note that multiple representative points 117 may be set on the robot 10 as illustrated in FIG. 13. In this case, the priority setter 20 may calculate, as the first summation, the summation of the potentials P(x) at the multiple positions x closest to the respective representative points 117 of the robot 10 in the focused posture on the focused candidate motion path 135. The priority setter 20 may set the use priority of the focused candidate motion path based on the summation of the first summations calculated for the multiple target robot postures. Thus, the potential evaluation value can be calculated with reduced computation. For example, at least one representative point 117 may be set on each of the six rectangular prisms 110 representing the shape of the robot 10.

The predetermined portion P of the robot 10 may be used as a representative point 117 to set the use priority. In this case, the potential P(x) at the position x closest to the predetermined portion P of the robot 10 may be identified for each of the focused postures on the focused candidate motion path 135, and the identified potential P(x) may be used in place of the first summation. The priority setter 20 may use, in place of the summation of the first summations, the summation of the potentials P(x) identified for the multiple target robot postures to set the use priority of the focused candidate motion path. Thus, the potential evaluation value can be calculated with reduced computation.

Example Setting of Potential

The priority setter 20 may set the potential P(x) in the specific potential field 200 based on, for example, the obstacle information 32 in the storage 3. In this case, the priority setter 20 may set the use priority of a candidate motion path based on the obstacle information 32.

For example, the priority setter 20 may calculate, for each position x, an obstacle density po(x) based on the obstacle information 32, and set the potential P(x) based on the calculated obstacle density p(x). The obstacle density po(x) varies based on the degree to which the obstacle 60 occupies an area around the position x. In this case, the priority setter 20 may set the use priority based on the obstacle density p(x). The obstacle density po(x) at a position x may refer to a value indicating the degree to which the obstacle 60 extends around the position x. A position x with a greater obstacle density po(x) indicates that the obstacle 60 occupies a larger portion of the area around the position x. In other words, a position x with a greater obstacle density po(x) indicates that the obstacle 60 occupies a larger area around the position x.

A position x with a greater obstacle density po(x) indicates that a greater proportion of the obstacle 60 is placed around the position x. Thus, a position x with a greater obstacle density po(x) indicates that the robot 10 is to avoid passing through the position x.

Thus, the priority setter 20 sets, for example, the negative value of the obstacle density po(x) at a position x as the potential P(x) at the position x. A position x in focus may be hereafter referred to as a focused position x.

FIG. 14 is a schematic diagram describing an example method for obtaining the obstacle density po(x). The priority setter 20 identifies a portion 60a of the obstacle 60 located around the focused position x based on the obstacle information 32. More specifically, the priority setter 20 identifies the portion 60a of the obstacle 60 located within a predetermined range 250 from the focused position x. The predetermined range 250 has a three-dimensional shape and is, for example, a sphere centered at the focused position x. Note that the shape of the predetermined range 250 is not limited to this example. The predetermined range 250 may be in the shape of a cube centered at the focused position x or in any other shape. The portion 60a may be hereafter referred to as a peripheral portion 60a.

The priority setter 20 then calculates an indicator of the size of the peripheral portion 60a of the obstacle 60 (also referred to as a first size indicator). For example, the priority setter 20 may calculate the volume of the peripheral portion 60a based on the obstacle information 32, and use the calculated volume as the first size indicator. The priority setter 20 uses the first size indicator calculated for the focused position x as the obstacle density po(x) at the focused position x.

The size of the predetermined range 250 may be set based on, for example, the dimensions of the robot 10. For example, when the predetermined range 250 has a spherical external shape, the radius of the predetermined range 250 may be less than the length of the shortest one of the sides of the six rectangular prisms representing the shape of the robot 10.

In this manner, the use priority of a candidate motion path may be set based on the obstacle information 32. This can set a higher use priority for a candidate motion path on which the robot 10 is less likely to interfere with the obstacle 60. Thus, the determiner 21 can efficiently find a motion path on which the robot 10 does not interfere with the obstacle 60.

The use priority may be set based on the obstacle density po(x) as in the above example. This can appropriately set a higher use priority for a candidate motion path on which the robot 10 is less likely to interfere with the obstacle 60.

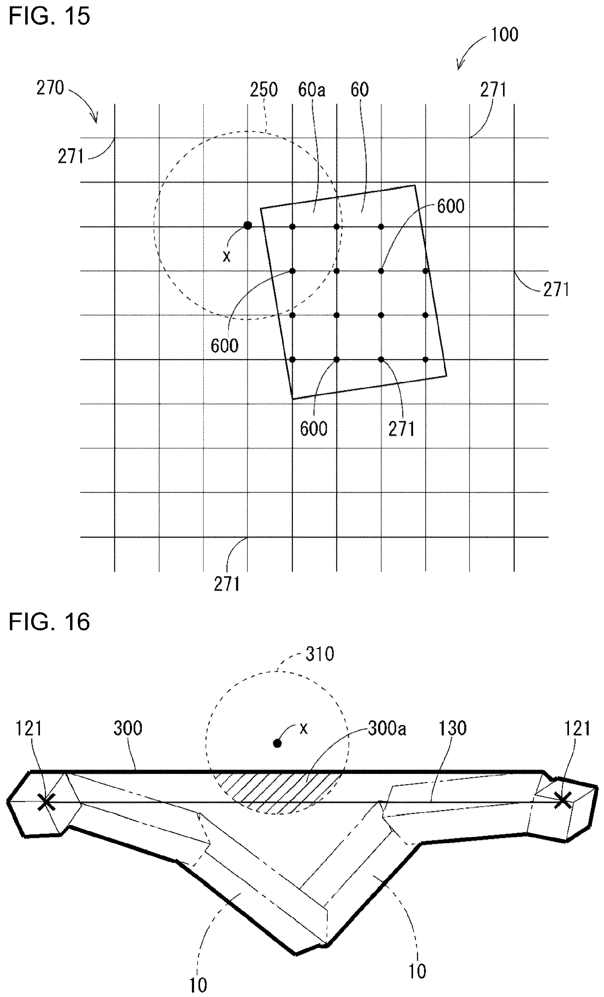

Note that the first size indicator may be calculated in any manner other than in the above example. FIG. 15 is a schematic diagram describing another method for calculating the first size indicator. In the example in FIG. 15, the priority setter 20 sets a three-dimensional grid 270 in the physical workspace 100 to split the physical workspace 100 in a grid pattern. Note that, in FIG. 15, the grid 270 is drawn two-dimensionally for ease of explanation. The grid 270 has multiple grid points 271. The priority setter 20 identifies one or more of the grid points 271 included in the obstacle 60 as representative points 600 of the obstacle 60 (also referred to as obstacle representative points 600). The priority setter 20 counts the number of obstacle representative points 600 within the predetermined range 250 from the focused position x, and uses the number as the first size indicator indicating the size of the peripheral portion 60a of the obstacle 60 located around the focused position x. The priority setter 20 uses the calculated first size indicator as the obstacle density po(x) at the focused position x. When the physical workspace 100 is split in a grid pattern as in this example, each of the grid points 271 may be used as a position x.

In the example in FIG. 15, the size of the predetermined range 250 may be set based on, for example, the interval between the lines of the grid 270 and the dimensions of the robot 10. For example, when the predetermined range 250 has a spherical external shape, the radius of the predetermined range 250 may be greater than the interval between the lines of the grid 270 and less than the length of the shortest one of the sides of the six rectangular prisms representing the shape of the robot 10.

In this manner, the obstacle density po(x) at the focused position x may be set based on the obstacle representative points 600 located within the predetermined range 250 from the focused position x. This allows the obstacle density po(x) to be calculated with reduced computation.

Note that the obstacle representative points 600 may be set in any manner other than in the above example. For example, the obstacle information 32 may include point cloud data indicating the shape of the obstacle 60. In this case, the priority setter 20 may use each of multiple points included in the point cloud indicated by the point cloud data as an obstacle representative point 600.

The priority setter 20 may use any other method to set the obstacle density po(x) based on the obstacle representative points 600 located within the predetermined range 250 from the focused position x. For example, the priority setter 20 sets, for each representative point 600 located within the predetermined range 250 from the focused position x, the degree of proximity (also referred to as a first proximity degree) of the representative point 600 to the focused position x. An obstacle representative point 600 at a shorter distance from the focused position x has a higher first proximity degree. The priority setter 20 calculates the summation of multiple first proximity degrees set for the respective representative points 600 located within the predetermined range 250 from the focused position x, and uses the summation as the obstacle density po(x) at the focused position x. Thus, the obstacle density po(x) at the focused position x varies based on the degree to which the obstacle 60 occupies an area around the focused position x and also based on the proximity of the focused position x to the obstacle 60 around the focused position x. When the focused position x is close to the obstacle 60 around the focused position x, the robot 10 is to avoid passing through the focused position x. Thus, the potential P(x) at the focused position x can be set based on the obstacle density po(x) that varies based on the proximity of the focused position x to the obstacle 60 around the focused position x. This can appropriately set the degree of acceptability for the robot 10 to pass through the position x. In other words, the potential P(x) at the focused position x can more accurately indicate the degree of acceptability for the robot 10 to pass through the position x. The use priority can be set based on the obstacle density po(x) that varies based on the proximity of the focused position x to the obstacle 60 around the focused position x. This can appropriately set a higher use priority for a candidate motion path on which the robot 10 is less likely to interfere with the obstacle 60.

When the negative value of the obstacle density po(x) is used as the potential P(x) as in the above example, the potential evaluation value (or the second summation) calculated for the focused candidate motion path may refer to an evaluation value indicating the remoteness of the focused candidate motion path from the obstacle 60 (in other words, the degree of remoteness of the focused candidate motion path from the obstacle 60). When the negative value of the obstacle density po(x) is used as the potential P(x), the potential evaluation value calculated for the focused candidate motion path may refer to an evaluation value indicating the remoteness of the obstacle 60 from the robot 10 moving along the focused candidate motion path. When the negative value of the obstacle density po(x) is used as the potential P(x), the potential evaluation value may be hereafter referred to as an obstacle density evaluation value. In the above example, the obstacle density evaluation value for a candidate motion path is used as an evaluation value indicating the use priority of the candidate motion path.

Other Example Method for Setting Use Priority

Example Method for Setting Use Priority Based on Reference Path

The priority setter 20 may set the use priority based on the obstacle information 32 and the initial-position reference path 130. An operation example of the priority setter 20 in this case will now be described. The reference path 130 hereafter refers to the initial-position reference path 130.

For example, the priority setter 20 calculates a robot density pr(x) for each position x in the physical workspace 100. The robot density pr(x) varies based on the degree to which the space through which the robot 10 moving along the reference path 130 passes occupies an area around the position x. The space through which the robot 10 moving along the reference path 130 passes may refer to the entire motion range of the robot 10 moving along the reference path 130. The space through which the robot 10 moving along the reference path 130 passes is hereafter also referred to as a reference-path sweep space.

The robot density pr(x) at a position x may refer to a value indicating the degree to which the reference-path sweep space extends around the position x. A position x with a greater robot density pr(x) indicates that the reference-path sweep space occupies a larger portion of the area around the position x. In other words, a position x with a greater robot density pr(x) indicates that the reference-path sweep space occupies a larger area around the position x. The priority setter 20 can identify the reference-path sweep space based on the reference path 130 and the robot information 31.

The reference path 130 is the shortest path from the starting point 120 to the ending point 121. The motion path of the robot 10 located closer to the reference path 130 can be shorter. Thus, the robot 10 is to pass through a position x that is closer to the reference-path sweep space.

Thus, the priority setter 20 may determine the use priority based on the robot density pr(x), which varies based on the degree to which the reference-path sweep space occupies an area around the position x, and based on the obstacle density po(x). For example, the priority setter 20 sets the potential P(x) for each position x based on the robot density pr(x) and the obstacle density po(x). For example, the priority setter 20 calculates the potential P(x) using Formula 1 below.

$$P(x) = -\rho o(x) + C1 \cdot \rho r(x) \qquad (1)$$

In Formula 1, C1 is a constant. The priority setter 20 uses the potential P(x) calculated with Formula 1 to obtain the potential evaluation value indicating the use priority as described above. The potential evaluation value calculated for a candidate motion path is used to set the use priority of the candidate motion path.

In this manner, the priority setter 20 sets the use priority based on the obstacle information 32 and the reference path 130. This can set a higher use priority for a candidate motion path on which the robot 10 is less likely to interfere with the obstacle 60 and that is also shorter. This allows efficient setting of a shorter motion path on which the robot 10 does not interfere with the obstacle 60.

The priority setter 20 can calculate the robot density pr(x) in the same manner as or in a similar manner to the obstacle density po(x). For example, the priority setter 20 identifies a portion 300a of the reference-path sweep space 300 located around the focused position x based on the robot information 31, as illustrated in FIG. 16. More specifically, the priority setter 20 identifies the portion 300a of the reference-path sweep space 300 located within a predetermined range 310 from the focused position x. The predetermined range 310 has a three-dimensional shape and is, for example, a sphere centered at the focused position x. Note that the shape of the predetermined range 310 is not limited to this example. The predetermined range 310 may be in the shape of a cube centered at the focused position x or in any other shape. The predetermined range 310 may be the same as or different from the predetermined range 250 described above. The portion 300a may be hereafter referred to as a peripheral portion 300a.

The priority setter 20 then calculates an indicator of the size of the peripheral portion 300a (also referred to as a second size indicator). For example, the priority setter 20 may calculate the volume of the peripheral portion 300a, and use the calculated volume as the second size indicator. The priority setter 20 uses the second size indicator calculated for the focused position x as the robot density pr(x) at the focused position x. The size of the predetermined range 310 may be set, for example, in the same manner as or in a similar manner to the predetermined range 250 described above.

Note that the second size indicator may be calculated in any manner other than in the above example. For example, the priority setter 20 sets the three-dimensional grid 270 in the physical workspace 100 as illustrated in FIG. 15 described above. The grid 270 has the multiple grid points 271. The priority setter 20 identifies one or more of the grid points 271 included in the reference-path sweep space 300 as representative points of the reference-path sweep space 300 (also referred to as sweep-space representative points). The priority setter 20 may count the number of sweep-space representative points within the predetermined range 310 from the focused position x, and use the number as the second size indicator of the peripheral portion 300a.

The priority setter 20 may set, for each sweep-space representative point located within the predetermined range 310 from the focused position x, the degree of proximity (also referred to as a second proximity degree) of the sweep-space representative point to the focused position x. A sweep-space representative point at a shorter distance from the focused position x has a higher second proximity degree. The priority setter 20 may calculate the summation of multiple second proximity degrees set for the respective sweep-space representative points located within the predetermined range 310 from the focused position x, and use the summation as the robot density pr(x) at the focused position x. Thus, the robot density pr(x) at the focused position x varies based on the degree to which the reference-path sweep space 300 occupies an area around the focused position x and also based on the proximity of the focused position x to the reference-path sweep space 300 around the focused position x. When the focused position x is close to the reference-path sweep space 300 around the focused position x, the robot 10 is to pass through the focused position x to allow a shorter motion path. Thus, the potential P(x) at the focused position x can be set based on the robot density pr(x) that varies based on the proximity of the focused position x to the reference-path sweep space 300 around the focused position x. This can appropriately set a higher use priority for a shorter candidate motion path.

The method for setting the use priority based on the obstacle information 32 and the reference path 130 is not limited to the above example. For example, the priority setter 20 uses the robot density pr(x) to calculate the second summation, instead of using the potential P(x) to calculate the potential evaluation value described above. More specifically, the priority setter 20 calculates, as the first summation, the summation of robot densities pr(x) at the multiple positions x included in the robot area 115 of the robot 10 in the focused posture on the focused candidate motion path 135. The priority setter 20 calculates the first summation for each of multiple target robot postures on the focused candidate motion path. The priority setter 20 then calculates, as the second summation, the summation of the first summations calculated for the multiple target robot postures. The second summation is referred to as a robot-density evaluation value Vpr. The robot-density evaluation value Vpr of the focused candidate motion path may refer to an evaluation value indicating the proximity of the focused candidate motion path to the reference path 130.

The priority setter 20 may set the use priority based on the robot-density evaluation value Vpr and an obstacle density evaluation value Vpo for a candidate motion path. For example, the priority setter 20 integrates the robot-density evaluation value Vpr and the obstacle density evaluation value Vpo for a candidate motion path to calculate an integrated evaluation value CV1r indicating the use priority of the candidate motion path. The priority setter 20 calculates the integrated evaluation value CV1r using, for example, Formula 2 below.

$$CV1r = V\rho o + C2 \cdot V\rho r \qquad (2)$$

In Formula 2, C2 is a constant. The integrated evaluation value CV1r is greater for a focused candidate motion path located farther from the obstacle 60, and is greater for a focused candidate motion path located closer to the reference path 130. A candidate motion path with a greater integrated evaluation value CV1r indicates that the candidate motion path has a higher use priority. The priority setter 20 uses the integrated evaluation value CV1r as an evaluation value indicating the use priority, in place of the potential evaluation value. The integrated evaluation value CV1r calculated for a candidate motion path is used to set the use priority of the candidate motion path. In the partial selection process, the determiner 21 may select B candidate motion paths with integrated evaluation values CV1r greater than or equal to a threshold from the A candidate motion paths. In the ordering process, the determiner 21 may assign the order in which the interference determination process is performed for each of the A candidate motion paths to cause a candidate motion path with a greater integrated evaluation value CV1r to have an earlier order in which the interference determination process is performed.

Note that the priority setter 20 may set the use priority without integrating the robot-density evaluation value Vpr and the obstacle density evaluation value Vpo. In this case, for example, the priority setter 20 sets a higher use priority for a candidate motion path with a greater obstacle density evaluation value Vpo. When multiple candidate motion paths have the same obstacle density evaluation value Vpo, the priority setter 20 sets a higher use priority for a candidate motion path with a greater robot-density evaluation value Vpr.

In another example, the priority setter 20 may set the use priority of a candidate motion path based on the obstacle information 32 and the proximity of the candidate motion path to the reference path 130. In this case, the priority setter 20 calculates a reference-path proximity evaluation value V1r indicating the degree of proximity of the candidate motion path to the reference path 130. The priority setter 20 sets, for example, multiple representative points on the candidate motion path. The priority setter 20 calculates the shortest distances from the respective representative points to the reference path 130. The priority setter 20 calculates the summation of the shortest distances calculated for the multiple representative points of the candidate motion path, and uses the summation as the reference-path proximity evaluation value V1r of the candidate motion path. A candidate motion path with a smaller reference-path proximity evaluation value V1r indicates that the candidate motion path is located closer to the reference path 130.

The priority setter 20 integrates the reference-path proximity evaluation value V1r calculated for a candidate motion path and the obstacle density evaluation value Vpo of the candidate motion path to calculate an integrated evaluation value CV2r indicating the use priority of the candidate motion path. The priority setter 20 calculates the integrated evaluation value CV2r using, for example, Formula 3 below.

$$CV2r = V\rho o - C3 \cdot V1r \qquad (3)$$

In Formula 3, C3 is a constant. The integrated evaluation value CV2r is greater for a focused candidate motion path located farther from the obstacle 60, and is greater for a focused candidate motion path located closer to the reference path 130. A candidate motion path with a greater integrated evaluation value CV2r indicates that the candidate motion path has a higher use priority. The priority setter 20 uses the integrated evaluation value CV2r as an evaluation value indicating the use priority, in place of the potential evaluation value. The integrated evaluation value CV2r calculated for a candidate motion path is used to set the use priority of the candidate motion path.

Note that the priority setter 20 may set the use priority without integrating the reference-path proximity evaluation value V1r and the obstacle density evaluation value Vpo. In this case, for example, the priority setter 20 sets a higher use priority for a candidate motion path with a greater obstacle density evaluation value Vpo. When multiple candidate motion paths have the same obstacle density evaluation value Vpo, the priority setter 20 sets a higher use priority for a candidate motion path with a smaller reference-path proximity evaluation value V1r.

In another example, the priority setter 20 may set the use priority of a candidate motion path based on the obstacle information 32 and the difference of the posture change pattern of the robot on the candidate motion path from the posture change pattern of the robot on the reference path 130 in the physical workspace 100. The posture change pattern of the robot on the reference path 130 in the physical workspace 100 is hereafter referred to as a reference-path posture change pattern. The posture change pattern of the robot on the candidate motion path in the physical workspace 100 is referred to as a candidate-motion-path posture change pattern. The posture change pattern of the robot on the focused candidate motion path in the physical workspace 100 is referred to as a focused candidate-motion-path posture change pattern. The reference-path posture change pattern is the posture change pattern of the robot 10 moving along the reference path 130. The candidate-motion-path change pattern is the posture change pattern of the robot 10 moving along the candidate motion path.

The priority setter 20 calculates a pattern-difference evaluation value V2r indicating the degree of difference of the candidate-motion-path posture change pattern from the reference-path posture change pattern. A smaller pattern-difference evaluation value V2r indicates a smaller difference of the candidate-motion-path posture change pattern from the reference-path posture change pattern. A smaller difference of the focused candidate-motion-path posture change pattern from the reference-path posture change pattern indicates that the focused candidate motion path is located closer to the reference path 130. Thus, a focused candidate motion path with a smaller pattern-difference evaluation value V2r indicates that the focused candidate motion path is located closer to the reference path 130.

The priority setter 20 integrates the pattern-difference evaluation value V2r calculated for a candidate motion path and the obstacle density evaluation value Vpo of the candidate motion path to calculate an integrated evaluation value CV3r indicating the use priority of the candidate motion path. The priority setter 20 calculates the integrated evaluation value CV3r using, for example, Formula 4 below.

$$CV3r = V\rho o - C4 \cdot V2r \qquad (4)$$

In Formula 4, C4 is a constant. The integrated evaluation value CV3r is greater for a focused candidate motion path located farther from the obstacle 60, and is greater for a smaller difference of the focused candidate-motion-path posture change pattern from the reference-path posture change pattern. A candidate motion path with a greater integrated evaluation value CV3r indicates that the candidate motion path has a higher use priority. The priority setter 20 uses the integrated evaluation value CV3r as an evaluation value indicating the use priority, in place of the potential evaluation value. The integrated evaluation value CV3r calculated for a candidate motion path is used to set the use priority of the candidate motion path.

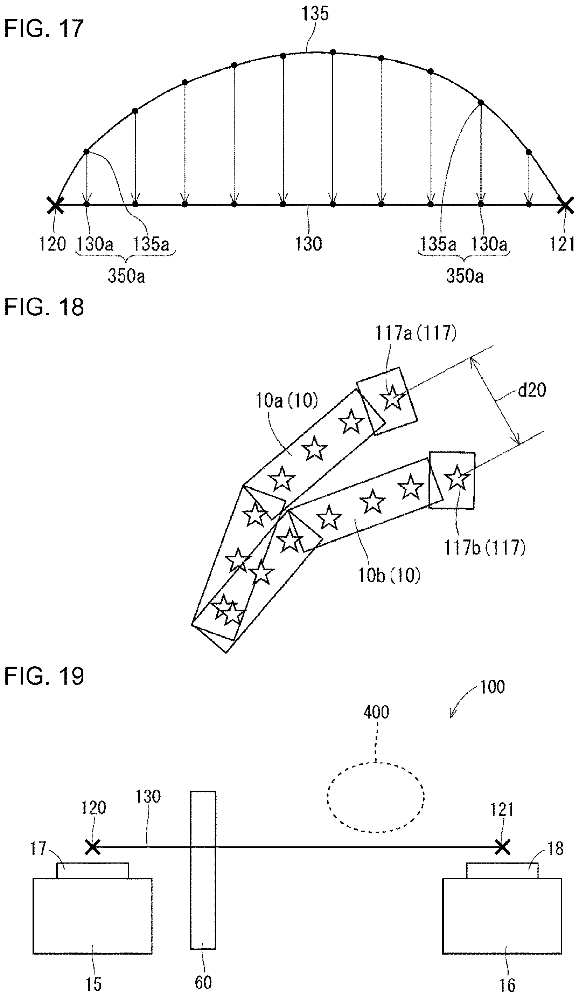

To calculate the pattern-difference evaluation value V2r, the priority setter 20 sets, for example, the multiple representative points 117 on the robot 10 as illustrated in FIG. 13 described above. The representative points 117 are referred to as robot representative points 117. The priority setter 20 also sets, for example, multiple representative points 135a on the candidate motion path 135 as illustrated in FIG. 17. The representative points 135a of the candidate motion path 135 are referred to as candidate-path representative points 135a. The priority setter 20 sets, for each of the multiple candidate-path representative points 135a, a representative point 130a on the reference path 130 at which the distance between the reference path 130 and the corresponding candidate-path representative point 135a is the shortest. The representative point 130a is also referred to as a reference-path representative point 130a. For one candidate motion path 135, multiple pairs of candidate-path representative points 135a and their corresponding reference-path representative points 130a are obtained.

A pair of a candidate-path representative point 135a and its corresponding reference-path representative point 130a is hereafter referred to as a representative point pair 350a. Multiple representative point pairs 350a are obtained for one candidate motion path 135. A candidate-path representative point 135a in focus is referred to as a focused candidate-path representative point 135a. The reference-path representative point 130a corresponding to the focused candidate-path representative point 135a is referred to as a focused reference-path representative point 130a. A pair of a focused candidate-path representative point 135a and its corresponding focused reference-path representative point 130a is referred to as a focused representative point pair 350a. A robot representative point 117 in focus is referred to as a focused robot representative point 117.

FIG. 18 is a schematic diagram of the robot 10 with the predetermined portion 10P located at a focused candidate-path representative point 135a of the focused candidate motion path 135 (also referred to as a robot 10a), and the robot 10 with the predetermined portion 10P located at a focused reference-path representative point 130a (also referred to as a robot 10b) in an example.

The priority setter 20 calculates a distance d20 between a focused robot representative point 117 of the robot 10a with the predetermined portion 10P located at the focused candidate-path representative point 135a of the focused candidate motion path 135 (also referred to as a focused robot representative point 117a) and a focused robot representative point 117 of the robot 10b with the predetermined portion 10P located at the focused reference-path representative point 130a (also referred to as a focused robot representative point 117b). The priority setter 20 calculates the distance d20 for each of the robot representative points 117. The priority setter 20 obtains, as the distance summation corresponding to the focused representative point pair 350a, the summation of the distances d20 calculated for the respective robot representative points 117 of the robot 10. The distance summation corresponding to the focused representative point pair 350a indicates the difference between the posture of the robot 10 with the predetermined portion 10P located at the focused candidate-path representative point 135a and the posture of the robot 10 with the predetermined portion 10P located at the focused reference-path representative point 130a.

The priority setter 20 calculates the distance summation for each of the multiple representative point pairs 350a for the focused candidate motion path 135. The priority setter 20 then calculates the summation of the multiple distance summations corresponding to the respective representative point pairs 350a for the focused candidate motion path 135. The priority setter 20 uses the summation as the pattern-difference evaluation value V2r indicating the degree of difference of the focused candidate-motion-path posture change pattern from the reference-path posture change pattern. In this manner, the priority setter 20 calculates the pattern-difference evaluation value V2r for each of the candidate motion paths 135. The priority setter 20 then calculates the integrated evaluation value CV3r for each of the candidate motion paths 135 using Formula 4 above.

Note that the priority setter 20 may set the use priority without integrating the pattern-difference evaluation value V2r and the obstacle density evaluation value Vpo. In this case, for example, the priority setter 20 sets a higher use priority for a candidate motion path with a greater obstacle density evaluation value Vpo. When multiple candidate motion paths have the same obstacle density evaluation value Vpo, the priority setter 20 sets a higher use priority for a candidate motion path with a smaller pattern-difference evaluation value V2r. Example Method for Setting Use Priority Based on Past Motion Path of Robot

The priority setter 20 may set the use priority based on the obstacle information 32 and a past motion path that is set by the path setter 22 in the past. An operation example of the priority setter 20 in this case will now be described. The motion path of the robot 10 set by the path setter 22 may be hereafter referred to as a set path.

The work environment of the robot 10, including the shape and the position of the obstacle 60, may not greatly change in a short time. In this case, the robot 10 is unlikely to interfere with the obstacle 60 on a candidate motion path located close to the motion path along which the robot 10 has moved recently. Thus, the priority setter 20 may set the use priority based on the motion path that is most recently set by the path setter 22 (also referred to as a latest set path) and based on the obstacle information 32. The method for setting the use priority based on the latest set path and the obstacle information 32 corresponds to, for example, the method for setting the use priority based on the reference path 130 and the obstacle information 32 described above, but with the reference path 130 replaced by the latest set path.

For example, the priority setter 20 calculates a robot density ps(x) for each position x in the physical workspace 100. The robot density ps(x) varies based on the degree to which the space through which the robot 10 moving along the latest set path passes occupies an area around the position x. The space through which the robot 10 moving along the latest set path passes may refer to the entire motion range of the robot 10 moving along the latest set path. The space through which the robot 10 moving along the latest set path passes is hereafter also referred to as a latest set-path sweep space. The robot density ps(x) may be referred to as a first robot density ps(x). The robot density pr(x) based on the reference path 130 described above may be referred to as a second robot density pr(x).

The first robot density ps(x) at a position x may refer to a value indicating the degree to which the latest set-path sweep space extends around the position x. A position x with a greater first robot density ps(x) indicates that the latest set-path sweep space occupies a larger portion of the area around the position x. In other words, a position x with a greater first robot density ps(x) indicates that the latest set-path sweep space occupies a larger area around the position x. The priority setter 20 can identify the latest set-path sweep space based on the latest set path and the robot information 31.

The priority setter 20 determines the use priority based on the first robot density ps(x), which varies based on the degree to which the latest set-path sweep space occupies an area around the position x, and based on the obstacle density po(x). For example, the priority setter 20 sets the potential P(x) for each position x based on the first robot density ps(x) and the obstacle density po(x). For example, the priority setter 20 calculates the potential P(x) using Formula 5 below.

$$P(x) = -\rho o(x) + D \cdot \rho s(x) \qquad (5)$$

In Formula 5, D is a constant. The priority setter 20 uses the potential P(x) calculated with Formula 5 to obtain the potential evaluation value indicating the use priority as described above. The potential evaluation value calculated for a candidate motion path is used to set the use priority of the candidate motion path. The priority setter 20 can calculate the first robot density ps(x) in the same manner as or in a similar manner to the obstacle density po(x) and the second robot density pr(x).

Note that the priority setter 20 may set the use priority based on J set paths recently set by the path setter 22 and based on the obstacle information 32 (J is an integer greater than or equal to 2). Among the J set paths recently set by the path setter 22, the motion path that is set j-th from the current time is referred to as a j-th set path (j is a variable satisfying $1 \leq j \leq J$). The first set path is the latest set path described above.

The priority setter 20 calculates a first robot density psj(x) for each position x in the physical workspace 100. The first robot density $\rho$sj(x) varies based on the degree to which the space through which the robot 10 moving along the j-th set path passes occupies an area around the position x. The space through which the robot 10 moving along the j-th set path passes is hereafter also referred to as a j-th set-path sweep space. The first robot density ps1(x) is the first robot density ps(x) described above. The first set-path sweep space is the latest set-path sweep space described above. The priority setter 20 can identify the j-th set-path sweep space based on the j-th set path and the robot information 31.

The priority setter 20 determines the use priority based on the J first robot densities $\rho$s1(x) to psJ(x) and the obstacle density po(x). For example, the priority setter 20 sets the potential P(x) for each position x based on the J first robot densities ps1(x) to psJ(x) and the obstacle density po(x). For example, the priority setter 20 calculates the potential P(x) using Formula 6 below.

$$P(x) = -\rho o(x) + D1 \cdot \rho s1(x) + D2 \cdot \rho s2(x) + \cdots + DJ \cdot \rho sJ(x) \qquad (6)$$

In Formula 6, D1 to DJ are constants satisfying D1 > D2 >... > DJ. The priority setter 20 uses the potential P(x) calculated with Formula 6 to obtain the potential evaluation value indicating the use priority as described above. The potential evaluation value calculated for a candidate motion path is used to set the use priority of the candidate motion path. The priority setter 20 can calculate the first robot density psj(x) in the same manner as or in a similar manner to the first robot density ps(x).

In this manner, the priority setter 20 sets the use priority based on the obstacle information 32 and a past set path. This can set a higher use priority for a candidate motion path on which the robot 10 is less likely to interfere with the obstacle 60. This allows efficient setting of a motion path on which the robot 10 does not interfere with the obstacle 60.

The method for setting the use priority based on the obstacle information 32 and the past set path is not limited to the above example. For example, the priority setter 20 uses the first robot density ps(x) to calculate the second summation, instead of using the potential P(x) to calculate the potential evaluation value described above. More specifically, the priority setter 20 calculates, as the first summation, the summation of first robot densities ps(x) at the multiple positions x included in the robot area 115 of the robot 10 in the focused posture on the focused candidate motion path 135. The priority setter 20 calculates the first summation for each of multiple target robot postures on the focused candidate motion path. The priority setter 20 then calculates, as the second summation, the summation of the first summations calculated for the multiple target robot postures. The second summation is referred to as a robot-density evaluation value Vps. The robot-density evaluation value Vps of the focused candidate motion path may refer to an evaluation value indicating the proximity of the focused candidate motion path to the latest set path.

The priority setter 20 integrates the robot-density evaluation value Vps and the obstacle density evaluation value Vpo for a candidate motion path to calculate an integrated evaluation value CV1s indicating the use priority of the candidate motion path. The priority setter 20 calculates the integrated evaluation value CV1s using, for example, Formula 7 below.

$$CV1s = V\rho o + E \cdot V\rho s \qquad (7)$$

In Formula 7, E is a constant. The integrated evaluation value CV1s is greater for a focused candidate motion path located farther from the obstacle 60, and is greater for a focused candidate motion path located closer to the latest set path. A candidate motion path with a greater integrated evaluation value CV1s indicates that the candidate motion path has a higher use priority. The priority setter 20 uses the integrated evaluation value CV1s as an evaluation value indicating the use priority, in place of the potential evaluation value.

Note that, for each of the J first robot densities ps1(x) to psJ(x), the priority setter 20 may use the first robot density psj(x) to calculate the second summation, instead of using the potential P(x) to calculate the potential evaluation value described above. The second summation calculated using the first robot density psj(x) in place of the potential P(x) is referred to as a robot-density evaluation value V$\rho$sj. When j = 1, the robot-density evaluation value V$\rho$s1 is the robot-density evaluation value Vps described above. The priority setter 20 may integrate the J robot-density evaluation values Vρs1 to VpsJ and the obstacle density evaluation value Vpo for a candidate motion path to calculate an integrated evaluation value CV10s indicating the use priority of the candidate motion path. The priority setter 20 calculates the integrated evaluation value CV10s using, for example, Formula 8 below.

$$CV10s = V\rho o + E1 \cdot V\rho s1 + E2 \cdot \rho s2 + \cdots + EJ \cdot V\rho sJ \qquad (8)$$

In Formula 8, E1 to EJ are constants satisfying E1 > E2 > ... > EJ. A candidate motion path with a greater integrated evaluation value CV10s indicates that the candidate motion path has a higher use priority. The priority setter 20 uses the integrated evaluation value CV10s as an evaluation value indicating the use priority, in place of the potential evaluation value.

The priority setter 20 may set the use priority without integrating the robot-density evaluation value Vps and the obstacle density evaluation value Vpo. In this case, for example, the priority setter 20 sets a higher use priority for a candidate motion path with a greater obstacle density evaluation value Vpo. When multiple candidate motion paths have the same obstacle density evaluation value Vpo, the priority setter 20 sets a higher use priority for a candidate motion path with a greater robot-density evaluation value Vps.

The priority setter 20 may set the use priority without integrating the J robot-density evaluation values Vρs1 to VpsJ and the obstacle density evaluation value Vpo. In this case, for example, the priority setter 20 sets a higher use priority for a candidate motion path with a greater obstacle density evaluation value Vpo. When multiple candidate motion paths have the same obstacle density evaluation value Vpo, the priority setter 20 sets a higher use priority for a candidate motion path with a greater integrated robot-density evaluation value. The integrated robot-density evaluation value is obtained by integrating the J robot-density evaluation values Vρs1 to VpsJ. The priority setter 20 calculates, for example, Ej·Vρsj for each of the J robot-density evaluation values Vρs1 to VpsJ. The priority setter 20 then calculates the sum of the J values E1·Vρs1 to EJ·VρsJ as the integrated robot-density evaluation value.

In another example, the priority setter 20 may set the use priority of a candidate motion path based on the obstacle information 32 and the proximity of the candidate motion path to the latest set path. In this case, the priority setter 20 calculates a latest set-path proximity evaluation value V1s indicating the degree of proximity of the candidate motion path to the latest set path. For example, the priority setter 20 can calculate the latest set-path proximity evaluation value V1s in the same manner as or in a similar manner to the reference-path proximity evaluation value V1r. More specifically, the priority setter 20 sets multiple representative points on the candidate motion path. The priority setter 20 calculates the shortest distances from the respective representative points to the latest set path. The priority setter 20 calculates the summation of the shortest distances calculated for the multiple representative points of the candidate motion path, and uses the summation as the latest set-path proximity evaluation value V1s of the candidate motion path. A candidate motion path with a smaller latest set-path proximity evaluation value V1s indicates that the candidate motion path is located closer to the latest set path.

The priority setter 20 integrates the latest set-path proximity evaluation value V1s calculated for a candidate motion path and the obstacle density evaluation value Vpo of the candidate motion path to calculate an integrated evaluation value CV2s indicating the use priority of the candidate motion path. The priority setter 20 calculates the integrated evaluation value CV2s using, for example, Formula 9 below.

$$CV2s = V\rho o - F \cdot V1s \qquad (9)$$

In Formula 9, F is a constant. A candidate motion path with a greater integrated evaluation value CV2s indicates that the candidate motion path has a higher use priority. The priority setter 20 uses the integrated evaluation value CV2s as an evaluation value indicating the use priority, in place of the potential evaluation value. The integrated evaluation value CV2s calculated for a candidate motion path is used to set the use priority of the candidate motion path.

Note that the priority setter 20 may calculate, for each of the first set path to the J-th set path, a j-th set-path proximity evaluation value V1sj indicating the degree of proximity of the candidate motion path to the j-th set path. For example, the priority setter 20 can calculate the j-th set-path proximity evaluation value V1sj in the same manner as or in a similar manner to the latest set-path proximity evaluation value V1s. The priority setter 20 may integrate the J evaluation values from the first set-path proximity evaluation value V1s1 to the J-th set-path proximity evaluation value V1sJ of a candidate motion path and the obstacle density evaluation value Vpo of the candidate motion path to calculate an integrated evaluation value CV20s indicating the use priority of the candidate motion path. The priority setter 20 calculates the integrated evaluation value CV20s using, for example, Formula 10 below.

$$CV20s = V\rho o - F1 \cdot V1s1 - F2 \cdot V1s2 - \cdots - FJ \cdot V1sJ \qquad (10)$$

In Formula 10, F1 to FJ are constants satisfying F1 > F2 >... > FJ. A candidate motion path with a greater integrated evaluation value CV20s indicates that the candidate motion path has a higher use priority. The priority setter 20 uses the integrated evaluation value CV20s as an evaluation value indicating the use priority, in place of the potential evaluation value.

The priority setter 20 may set the use priority without integrating the latest set-path proximity evaluation value V1s and the obstacle density evaluation value Vpo. In this case, for example, the priority setter 20 sets a higher use priority for a candidate motion path with a greater obstacle density evaluation value Vpo. When multiple candidate motion paths have the same obstacle density evaluation value Vpo, the priority setter 20 sets a higher use priority for a candidate motion path with a smaller latest set-path proximity evaluation value V1s.

The priority setter 20 may set the use priority without integrating the J evaluation values from the first set-path proximity evaluation value V1s1 to the J-th set-path proximity evaluation value V1sJ and the obstacle density evaluation value Vpo. In this case, for example, the priority setter 20 sets a higher use priority for a candidate motion path with a greater obstacle density evaluation value Vpo. When multiple candidate motion paths have the same obstacle density evaluation value Vpo, the priority setter 20 sets a higher use priority for a candidate motion path with a smaller integrated proximity evaluation value. The integrated proximity evaluation value is obtained by integrating the J evaluation values from the first set-path proximity evaluation value V1s1 to the J-th set-path proximity evaluation value V1sJ. The priority setter 20 calculates, for example, Fj·V1sj for each of the J evaluation values from the first set-path proximity evaluation value V1s1 to the J-th set-path proximity evaluation value V1sJ. The priority setter 20 then calculates the sum of the J values F1·V1s1 to FJ·V1sJ as the integrated proximity evaluation value.

In another example, the priority setter 20 may set the use priority of a candidate motion path based on the obstacle information 32 and the difference of the posture change pattern of the robot on the candidate motion path (in other words, the candidate-motion-path posture change pattern) from the posture change pattern of the robot on the latest set path in the physical workspace 100. The posture change pattern of the robot 10 on the latest set path in the physical workspace 100 is hereafter referred to as a latest set-path posture change pattern. The latest set-path posture change pattern is the posture change pattern of the robot 10 moving along the latest set path.

The priority setter 20 calculates a pattern-difference evaluation value V2s indicating the degree of difference of the candidate-motion-path posture change pattern from the latest set-path posture change pattern. A smaller pattern-difference evaluation value V2s indicates a smaller difference of the candidate-motion-path posture change pattern from the latest set-path posture change pattern. A smaller difference of the focused candidate-motion-path posture change pattern from the latest set-path posture change pattern indicates that the focused candidate motion path is located closer to the latest set path. Thus, a focused candidate motion path with a smaller pattern-difference evaluation value V2s indicates that the focused candidate motion path is located closer to the latest set path. The priority setter 20 can calculate the pattern-difference evaluation value V2s in the same manner as or in a similar manner to the pattern-difference evaluation value V2r described above.

The priority setter 20 integrates the pattern-difference evaluation value V2s calculated for a candidate motion path and the obstacle density evaluation value Vpo of the candidate motion path to calculate an integrated evaluation value CV3s indicating the use priority of the candidate motion path. The priority setter 20 calculates the integrated evaluation value CV3s using, for example, Formula 11 below.

$$CV3s = V\rho o - G \cdot V2s \qquad (11)$$

In Formula 11, G is a constant. A candidate motion path with a greater integrated evaluation value CV3s indicates that the candidate motion path has a higher use priority. The priority setter 20 uses the integrated evaluation value CV3s as an evaluation value indicating the use priority, in place of the potential evaluation value. The integrated evaluation value CV3s calculated for a candidate motion path is used to set the use priority of the candidate motion path.

Note that the priority setter 20 may calculate, for each of the first set path to the J-th set path, a pattern-difference evaluation value V2sj indicating the degree of difference of the candidate-motion-path posture change pattern from the posture change pattern of the robot 10 on the j-th set path. For example, the priority setter 20 can calculate the pattern-difference evaluation value V2sj in the same manner as or in a similar manner to the pattern-difference evaluation value V2r described above. The priority setter 20 may integrate the J pattern-difference evaluation values V2s1 to V2sJ of a candidate motion path and the obstacle density evaluation value Vpo of the candidate motion path to calculate an integrated evaluation value CV30s indicating the use priority of the candidate motion path. The priority setter 20 calculates the integrated evaluation value CV30s using, for example, Formula 12 below.

$$CV30s = V\rho o - G1 \cdot V2s1 - G2 \cdot V2s2 - \cdots - GJ \cdot V2sJ \qquad (12)$$

In Formula 12, G1 to GJ are constants satisfying G1 > G2 >... > GJ. A candidate motion path with a greater integrated evaluation value CV30s indicates that the candidate motion path has a higher use priority. The priority setter 20 uses the integrated evaluation value CV30s as an evaluation value indicating the use priority, in place of the potential evaluation value.

The priority setter 20 may set the use priority without integrating the pattern-difference evaluation value V2s and the obstacle density evaluation value Vpo. In this case, for example, the priority setter 20 sets a higher use priority for a candidate motion path with a greater obstacle density evaluation value Vpo. When multiple candidate motion paths have the same obstacle density evaluation value Vpo, the priority setter 20 sets a higher use priority for a candidate motion path with a smaller pattern-difference evaluation value V2s.

The priority setter 20 may set the use priority without integrating the J pattern-difference evaluation values V2s1 to V2sJ and the obstacle density evaluation value Vpo. In this case, for example, the priority setter 20 sets a higher use priority for a candidate motion path with a greater obstacle density evaluation value Vpo. When multiple candidate motion paths have the same obstacle density evaluation value Vpo, the priority setter 20 sets a higher use priority for a candidate motion path with a smaller integrated pattern-difference evaluation value. The integrated pattern-difference evaluation value is obtained by integrating the J pattern-difference evaluation values V2s1 to V2sJ. The priority setter 20 calculates, for example, $Gj \cdot V2sj$ for each of the J pattern-difference evaluation values V2s1 to V2sJ. The priority setter 20 then calculates the sum of the J values $G1 \cdot V2s1$ to $GJ \cdot V2sJ$ and uses the negative value of the sum as the integrated pattern-difference evaluation value.

In the above example, the priority setter 20 sets the use priority based on the obstacle information 32 and the past set path. However, the priority setter 20 may set the use priority based on the past set path without using the obstacle information 32. In this case, for example, the priority setter 20 may set the first robot density $ps(x)$ as the potential $P(x)$, and calculate the potential evaluation value based on this potential $P(x)$. The priority setter 20 may instead set an integrated robot density that is the sum of the J values $D1 \cdot \rho s1(x)$ to $DJ \cdot \rho sJ(x)$ as the potential $P(x)$, and calculate the potential evaluation value based on this potential $P(x)$. The priority setter 20 may instead use the robot-density evaluation value Vps as an evaluation value indicating the use priority, in place of the potential evaluation value. The priority setter 20 may instead use the integrated robot-density evaluation value, which is the sum of the J values $E1 \cdot Vps1$ to $EJ \cdot VpsJ$, as an evaluation value indicating the use priority, in place of the potential evaluation value. The priority setter 20 may instead use the negative value of the latest set-path proximity evaluation value V1s as an evaluation value indicating the use priority, in place of the potential evaluation value. The priority setter 20 may instead use the negative value of the integrated proximity evaluation value, which is the sum of the J values $F1 \cdot V1s1$ to $FJ \cdot V1sJ$, as an evaluation value indicating the use priority, in place of the potential evaluation value. The priority setter 20 may instead use the negative value of the pattern-difference evaluation value V2s as an evaluation value indicating the use priority, in place of the potential evaluation value. The priority setter 20 may instead use the negative value of the integrated pattern-difference evaluation value, which is the sum of the J values $G1 \cdot V2s1$ to $GJ \cdot V2sJ$, as an evaluation value indicating the use priority, in place of the potential evaluation value.

The priority setter 20 may set the use priority based on the obstacle information 32, the reference path 130, and the past set path. In this case, for example, the priority setter 20 may set, as the potential $P(x)$, the sum of $C1 \cdot pr(x)$ and the value of the right side of Formula 5 or Formula 6, and calculate the potential evaluation value based on this potential $P(x)$. The priority setter 20 may instead use the sum of $C2 \cdot V\rho r$ and the value of the right side of any one of Formulas 7 to 12 as an integrated evaluation value indicating the use priority, in place of the potential evaluation value. The priority setter 20 may instead use the sum of $-C3 \cdot V1r$ and the value of the right side of any one of Formulas 7 to 12 as an integrated evaluation value indicating the use priority, in place of the potential evaluation value. The priority setter 20 may instead use the sum of $-C4 \cdot V2r$ and the value of the right side of any one of Formulas 7 to 12 as an integrated evaluation value indicating the use priority, in place of the potential evaluation value.

The priority setter 20 may set the use priority based on the reference path 130 and the past set path without using the obstacle information 32. In this case, for example, the priority setter 20 may set, as the potential $P(x)$, the sum of $C1 \cdot \rho r(x)$ and the first robot density $ps(x)$, and calculate the potential evaluation value based on this potential $P(x)$. The priority setter 20 may instead set, as the potential $P(x)$, the sum of $C1 \cdot \rho r(x)$ and the integrated robot density, which is the sum of the J values $D1 \cdot \rho s1(x)$ to $DJ \cdot \rho sJ(x)$, and calculate the potential evaluation value based on this potential $P(x)$. The priority setter 20 may instead use the sum of $C2 \cdot Vpr$, $-C3 \cdot V1r$, or $-C4 \cdot V2r$ and the robot-density evaluation value Vps as an evaluation value indicating the use priority, in place of the potential evaluation value. The priority setter 20 may instead use the sum of $C2 \cdot V\rho r$, $-C3 \cdot V1r$, or $-C4 \cdot V2r$ and the integrated robot-density evaluation value, which is the sum of the J values $E1 \cdot V\rho s1$ to $EJ \cdot V\rho sJ$, as an evaluation value indicating the use priority, in place of the potential evaluation value. The priority setter 20 may instead use the sum of $C2 \cdot V\rho r$, $-C3 \cdot V1r$, or $-C4 \cdot V2r$ and the negative value of the latest set-path proximity evaluation value V1s as an evaluation value indicating the use priority, in place of the potential evaluation value. The priority setter 20 may instead use the sum of $C2 \cdot V\rho r$, $-C3 \cdot V1r$, or $-C4 \cdot V2r$ and the negative value of the integrated proximity evaluation value, which is the sum of the J values $F1 \cdot V1s1$ to $FJ \cdot V1sJ$, as an evaluation value indicating the use priority, in place of the potential evaluation value. The priority setter 20 may instead use the sum of $C2 \cdot V\rho r$, $-C3 \cdot V1r$, or $-C4 \cdot V2r$ and the negative value of the pattern-difference evaluation value V2s as an evaluation value indicating the use priority, in place of the potential evaluation value. The priority setter 20 may instead use the sum of C2·V$\rho$r, -C3·V1r, or -C4·V2r and the negative value of the integrated pattern-difference evaluation value, which is the sum of the J values G1·V2$\rho$s1 to GJ·V2sJ, as an evaluation value indicating the use priority, in place of the potential evaluation value.

The priority setter 20 may set the use priority based on the past set path and the result of motion of the robot 10 along the past set path.

When the result of motion of the robot 10 moving along a set path is less acceptable, the result of motion is likely to be less acceptable when the robot 10 moves along a path equal to or similar to this path. When the result of motion of the robot 10 moving along a path is acceptable, the result of motion is likely to be acceptable when the robot 10 moves along a path equal to or similar to this path.

The priority setter 20 sets the use priority based on the past set path and the result of motion of the robot 10 along the past set path. This can set a higher use priority for a candidate motion path that is more likely to produce an acceptable result of motion. This allows efficient setting of a motion path that is more likely to produce an acceptable result of motion.

For example, the priority setter 20 may set the use priority using Formula 5. In this case, when the result of motion of the robot 10 along the latest set path is acceptable, the priority setter 20 maintains the positive sign of D·$\rho$s(x) on the right side of Formula 5 to calculate the potential P(x). When the result of motion of the robot 10 along the latest set path is less acceptable, the priority setter 20 changes the sign of D·$\rho$s(x) from positive to negative on the right side of Formula 5 to calculate the potential P(x). Thus, when the result of motion of the robot 10 along the latest set path is less acceptable, a candidate motion path located closer to the latest set path is assigned with a lower use priority.

The acceptable result of motion may include the motion time of the robot 10 from the start to the end of the motion along the set path being shorter than or equal to the average within a latest predetermined period. The motion time of the robot 10 and its average is obtained by, for example, the controller 2. The acceptable result of motion may also include the total power consumption of the robot 10 from the start to the end of the motion along the set path being less than or equal to the average within the latest predetermined period. The robot 10 includes a sensor that measures its power consumption. The controller 2 can obtain the power consumption of the robot 10 based on the detection result from the sensor.

The less acceptable result of motion may include the motion time of the robot 10 from the start to the end of the motion along the set path being longer than the average within the latest predetermined period. The less acceptable result of motion may also include the total power consumption of the robot 10 from the start to the end of the motion along the set path being greater than the average within the latest predetermined period. The less acceptable result of motion may also include the robot 10 decelerated or stopped in response to a person entering the physical workspace 100. In this case, for example, the controller 2 detects a person entering the physical workspace 100 based on an image signal from a camera that captures an image of the physical workspace 100. The controller 2 decelerates or stops the motion of the robot 10 upon detecting a person entering the physical workspace 100.

In another example, the priority setter 20 may set the use priority using Formula 6. In this case, when the result of motion of the robot 10 along the j-th set path is acceptable, the priority setter 20 maintains the positive sign of Dj·$\rho$sj(x) on the right side. When the result of motion of the robot 10 along the j-th set path is less acceptable, the priority setter 20 changes the sign of Dj·$\rho$sj(x) on the right side from positive to negative. The priority setter 20 performs this sign manipulation for each of the J terms from D1·$\rho$s1(x) to DJ·$\rho$sJ(x). The priority setter 20 then calculates the potential P(x) using Formula 6 after the sign manipulation.

In another example, the priority setter 20 may set the use priority using Formula 7. In this case, when the result of motion of the robot 10 along the latest set path is acceptable, the priority setter 20 directly uses Formula 7 to calculate the integrated evaluation value CV1s. When the result of motion of the robot 10 along the latest set path is less acceptable, the priority setter 20 changes the sign of the term corresponding to the latest set path on the right side of Formula 7, or specifically, E·V$\rho$s, from positive to negative to calculate the integrated evaluation value CV1s. The priority setter 20 can also calculate the integrated evaluation values CV2s and CV3s using Formulas 9 and 11 in the same manner as or in a similar manner to the above to set the use priority.

In another example, the priority setter 20 may set the use priority using Formula 8. In this case, when the result of motion of the robot 10 along the j-th set path is acceptable, the priority setter 20 maintains the positive sign of the term corresponding to the j-th set path on the right side, or specifically, Ej·V$\rho$sj. When the result of motion of the robot 10 along the j-th set path is less acceptable, the priority setter 20 changes the sign of Ej·V$\rho$sj on the right side from positive to negative. The priority setter 20 performs this sign manipulation for each of the J terms from E1·V$\rho$s1 to EJ·V$\rho$sJ. The priority setter 20 then calculates the integrated evaluation value CV10s using Formula 8 after the sign manipulation. The priority setter 20 can also calculate the integrated evaluation values CV20s and CV30s using Formulas 10 and 12 after the sign manipulation in the same manner as or in a similar manner to the above to set the use priority.

The priority setter 20 may determine whether to use the past set path for setting the use priority based on a change in the work environment of the robot 10 (also referred to as a robot work environment). For example, the priority setter 20 determines, in step s1 in the motion path setting process, whether the current robot work environment has greatly changed from the robot work environment in the previous motion path setting process (also referred to as a previous robot work environment). For example, when the current position of the obstacle 60 in the physical workspace 100 has greatly changed from the position of the obstacle 60 in the previous motion path setting process, the priority setter 20 determines that the current robot work environment has greatly changed from the previous robot work environment. In this case, for example, the priority setter 20 sets multiple representative points on the obstacle 60. The priority setter 20 calculates, for each of the representative points, the distance between the current position of the representative point and the position of the representative point in the previous motion path setting process. When the summation of the distances calculated for the multiple representative points of the obstacle 60 is greater than or equal to a threshold, the priority setter 20 determines that the current position of the obstacle 60 has greatly changed from the position of the obstacle 60 in the previous motion path setting process.

When the priority setter 20 determines that the current robot work environment has greatly changed from the previous robot work environment in step s1, the priority setter 20 determines not to use the past set path for setting the use priority. In this case, the priority setter 20 sets the use priority using, for example, any one of Formulas 1 to 4 above. When the priority setter 20 determines that the current robot work environment has not greatly changed from the previous robot work environment in step s1, the priority setter 20 determines to use the past set path for setting the use priority. In this case, the priority setter 20 sets the use priority using, for example, any one of Formulas 5 to 12 above.

Note that whether the current robot work environment has greatly changed from the previous robot work environment may be determined in any manner other than in the above example. For example, the priority setter 20 may use the obstacle density po(x) to determine whether the current robot work environment has greatly changed from the previous robot work environment. In this case, the priority setter 20 calculates, for each position x, the difference value between the current obstacle density po(x) and the obstacle density po(x) in the previous motion path setting process. When the summation of the difference values calculated for the respective positions x is greater than or equal to a threshold, the priority setter 20 determines that the current robot work environment has greatly changed from the previous robot work environment.

In another example, the priority setter 20 may determine that the current robot work environment has greatly changed from the previous robot work environment when the current position of the starting point 120 has greatly changed from the position of the starting point 120 in the previous motion path setting process. In this case, the priority setter 20 may calculate the distance between the current position of the starting point 120 and the position of the starting point 120 in the previous motion path setting process. When the distance is greater than or equal to a threshold, the priority setter 20 may determine that the current position of the starting point 120 has greatly changed from the position of the starting point 120 in the previous motion path setting process. The priority setter 20 may determine that the current robot work environment has greatly changed from the previous robot work environment when the current position of the ending point 121 has greatly changed from the position of the ending point 121 in the previous motion path setting process. In this case, the priority setter 20 may calculate the distance between the current position of the ending point 121 and the position of the ending point 121 in the previous motion path setting process. When the distance is greater than or equal to a threshold, the priority setter 20 may determine that the current position of the ending point 121 has greatly changed from the position of the ending point 121 in the previous motion path setting process.

In this manner, the priority setter 20 determines whether to use the past set path for setting the use priority based on a change in the robot work environment. This can efficiently set a higher use priority for a candidate motion path on which the robot 10 is less likely to interfere with the obstacle 60. This allows efficient setting of a motion path on which the robot 10 does not interfere with the obstacle 60.

Note that the priority setter 20 may determine whether to use the past set path for setting the use priority in response to an instruction from the user. In this case, for example, the user provides an instruction to the controller 2 through the input unit 5 as to whether the priority setter 20 uses the past set path for setting the use priority.

Example Method For Setting Use Priority Based on Area Through Which Robot Is to Avoid Passing

The priority setter 20 may set the use priority based on the obstacle information 32 and an area through which the robot 10 is to avoid passing (also referred to as a specific area). FIG. 19 is a schematic diagram of an example specific area 400. For example, the specific area 400 in the physical workspace 100 may include an area that is more likely to be accessed by a person. An operation example of the priority setter 20 in this case will now be described.

For example, the priority setter 20 calculates a specific-area density pt(x) for each position x in the physical workspace 100. The specific-area density pt(x) varies based on the degree to which the specific area 400 occupies an area around the position x. The specific-area density pt(x) at a position x may refer to a value indicating the degree to which the specific area 400 extends around the position x. A position x with a greater specific-area density pt(x) indicates that the specific area 400 occupies a larger portion of the area around the position x. The storage 3 stores specific-area information indicating the position and the range of the specific area 400. The priority setter 20 can identify the specific area 400 based on the specific-area information in the storage 3. The specific area 400 is, for example, a three-dimensional space.

The priority setter 20 determines the use priority based on the specific-area density pt(x) and the obstacle density $\rho o(x)$. For example, the priority setter 20 sets the potential P(x) for each position x based on the specific-area density pt(x) and the obstacle density po(x). For example, the priority setter 20 calculates the potential P(x) using Formula 13 below.

$$P(x) = -\rho o(x) - L1 \cdot \rho t(x) \qquad (13)$$

In Formula 13, L1 is a constant. The priority setter 20 uses the potential P(x) calculated with Formula 13 to obtain the potential evaluation value indicating the use priority as described above. The potential evaluation value calculated for a candidate motion path is used to set the use priority of the candidate motion path. The priority setter 20 can calculate the specific-area density pt(x) in the same manner as or in a similar manner to the obstacle density po(x), the first robot density ps(x), and the second robot density pr(x).

In this manner, the priority setter 20 sets the use priority based on the obstacle information 32 and the specific area 400. This can set a higher use priority for a candidate motion path on which the robot 10 is less likely to interfere with the obstacle 60 and that is also away from an area through which the robot 10 is to avoid passing. This allows efficient setting of a motion path on which the robot 10 does not interfere with the obstacle 60 and that is also away from an area through which the robot 10 is to avoid passing.

The method for setting the use priority based on the obstacle information 32 and the specific area 400 is not limited to the above example. For example, the priority setter 20 uses the negative value of the specific-area density pt(x) to calculate the second summation, instead of using the potential P(x) to calculate the potential evaluation value described above. The second summation is referred to as a specific-area density evaluation value Vpt. The specific-area density evaluation value Vpt of the focused candidate motion path may refer to an evaluation value indicating the remoteness of the focused candidate motion path from the specific area 400, or may also refer to an evaluation value indicating the proximity of the focused candidate motion path to the specific area 400.

The priority setter 20 integrates the specific-area density evaluation value Vpt and the obstacle density evaluation value Vpo for a candidate motion path to calculate an integrated evaluation value CV1t indicating the use priority of the candidate motion path. The priority setter 20 calculates the integrated evaluation value CV1t using, for example, Formula 14 below.

$$CV1t = V\rho o + L2 \cdot V\rho t \qquad (14)$$

In Formula 14, L2 is a constant. The integrated evaluation value CV1t is greater for a focused candidate motion path located farther from the obstacle 60, and is greater for a focused candidate motion path located farther from the specific area 400. A candidate motion path with a greater integrated evaluation value CV1t indicates that the candidate motion path has a higher use priority. The priority setter 20 uses the integrated evaluation value CV1t as an evaluation value indicating the use priority, in place of the potential evaluation value. The priority setter 20 thus sets the use priority of the focused candidate motion path based on the specific-area density evaluation value Vpt of the focused candidate motion path. In other words, the priority setter 20 sets the use priority of the focused candidate motion path based on the proximity of the focused candidate motion path to the specific area 400.

Note that the priority setter 20 may set the use priority without integrating the specific-area density evaluation value Vpt and the obstacle density evaluation value Vpo. In this case, for example, the priority setter 20 sets a higher use priority for a candidate motion path with a greater obstacle density evaluation value Vpo. When multiple candidate motion paths have the same obstacle density evaluation value Vpo, the priority setter 20 sets a higher use priority for a candidate motion path with a greater specific-area density evaluation value Vpt.

In the above example, the priority setter 20 sets the use priority based on the obstacle information 32 and the specific area 400. However, the priority setter 20 may set the use priority based on the specific area 400 without using the obstacle information 32. In this case, for example, the priority setter 20 may set the negative value of the specific-area density pt(x) as the potential P(x), and calculate the potential evaluation value based on this potential P(x). The priority setter 20 may instead use the specific-area density evaluation value Vpt as an evaluation value indicating the use priority, in place of the potential evaluation value.

The priority setter 20 may set the use priority based on the specific area 400 and at least one of the obstacle information 32, the reference path 130, or the past set path.

For example, the priority setter 20 may set the use priority based on the reference path 130 and the specific area 400. In this case, for example, the priority setter 20 may calculate the potential P(x) using a formula corresponding to Formula 1, but with -po(x) replaced by -pt(x). The priority setter 20 may instead calculate the integrated evaluation value using a formula corresponding to any one of Formulas 2 to 4, but with Vpo replaced by Vpt.

In another example, the priority setter 20 may set the use priority based on the past set path and the specific area 400. In this case, for example, the priority setter 20 may calculate the potential P(x) using a formula corresponding to Formula 5 or Formula 6, but with -po(x) replaced by -pt(x). The priority setter 20 may instead calculate the integrated evaluation value using a formula corresponding to any one of Formulas 7 to 12, but with Vpo replaced by Vpt.

In another example, the priority setter 20 may set the use priority based on the obstacle information 32, the reference path 130, and the specific area 400. In this case, the priority setter 20 may set, as the potential P(x), the sum of -L1·$\rho$t(x) and the value of the right side of Formula 1. The priority setter 20 may instead use, as the integrated evaluation value, the sum of L2·V$\rho$t and the value of the right side of any one of Formulas 2 to 4.

In another example, the priority setter 20 may set the use priority based on the obstacle information 32, the past set path, and the specific area 400. In this case, the priority setter 20 may set, as the potential P(x), the sum of the -L1·$\rho$t(x) and the value of the right side of Formula 5 or Formula 6. The priority setter 20 may instead use, as the integrated evaluation value, the sum of L2·V$\rho$t and the value of the right side of any one of Formulas 7 to 12.

In another example, the priority setter 20 may set the use priority based on the reference path 130, the past set path, and the specific area 400. In this case, the priority setter 20 may calculate the potential P(x) using a formula corresponding to Formula 5 or Formula 6, but with -po(x) replaced by the sum of C1·$\rho$r(x) and -L1·$\rho$t(x). The priority setter 20 may instead calculate the integrated evaluation value using a formula corresponding to any one of Formulas 7 to 12, but with Vpo replaced by the sum of C2·V$\rho$r, -C3·V1r, or -C4·V2r and L2·V$\rho$t.

In another example, the priority setter 20 may set the use priority based on the obstacle information 32, the reference path 130, the past set path, and the specific area 400. In this case, the priority setter 20 may set, as the potential P(x), the sum of C1·$\rho$r(x), -L1·$\rho$t(x), and the value of the right side of Formula 5 or Formula 6. The priority setter 20 may instead use, as the integrated evaluation value, the sum of C2·V$\rho$r, -C3·V1r, or -C4·V2r, L2·V$\rho$t, and the value of the right side of any of Formulas 7 to 12.

Other Operation Example of Determiner

In the physical workspace 100, the determiner 21 may divide the A candidate motion paths into multiple groups each including candidate motion paths located adjacent to each other. The determiner 21 may select, from the candidate motion paths included in each of the multiple groups, the candidate motion path with the highest use priority, and perform the interference determination process for the selected candidate motion path.

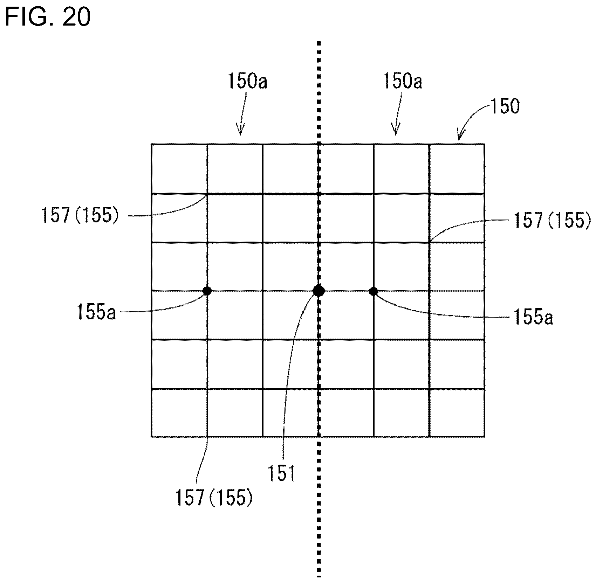

FIG. 20 is a schematic diagram describing an example method performed by the determiner 21 to divide the A candidate motion paths into multiple groups. In the example in FIG. 20, the determiner 21 divides the A candidate motion paths into multiple groups using binary search.

The determiner 21 uses, for example, the plane 150 with the grid 156 (illustrated in FIG. 10 described above) to divide the A candidate motion paths into groups. In this example, the A candidate motion paths pass through the respective A waypoints 155 (in other words, the A grid points 157) on the plane 150.

For example, the determiner 21 splits the plane 150 equally into two sections 150a. In the example in FIG. 20, the plane 150 is split into two sections in the lateral direction of this figure. For each of the sections 150a, the determiner 21 places the multiple candidate motion paths passing through the respective waypoints 155 on the section 150a into one group. The multiple candidate motion paths passing through the respective waypoints 155 on one section 150a are located adjacent to each other. In this manner, the A candidate motion paths are divided into two groups each including candidate motion paths located adjacent to each other. Note that the waypoints 155 on the boundary between the two sections 150a are treated as being included in either of the two sections 150a. The same applies to the waypoints 155 on boundaries between multiple sections described later.

The determiner 21 selects, from the multiple candidate motion paths included in each of the groups, the candidate motion path with the highest use priority as a representative candidate motion path. In FIG. 20, the waypoint 155 through which the representative candidate motion path passes is illustrated as a representative waypoint 155a.

The determiner 21 then selects the representative candidate motion path with the highest use priority from the representative candidate motion paths of the multiple groups (two groups in this example). The determiner 21 performs the interference determination process for the selected representative candidate motion path.

When the robot 10 is determined not to interfere with an obstacle in the interference determination process for the representative candidate motion path with the highest use priority, step s3 described above is performed. In step s3, the motion path of the robot 10 is set based on the representative candidate motion path on which the robot 10 is determined not to interfere with an obstacle.

When the robot 10 is determined to interfere with an obstacle in the interference determination process for the representative candidate motion path with the highest use priority, the determiner 21 performs the interference determination process for the representative candidate motion path with the second highest use priority. In this example, the determiner 21 performs the interference determination process for the other of the two representative candidate motion paths.

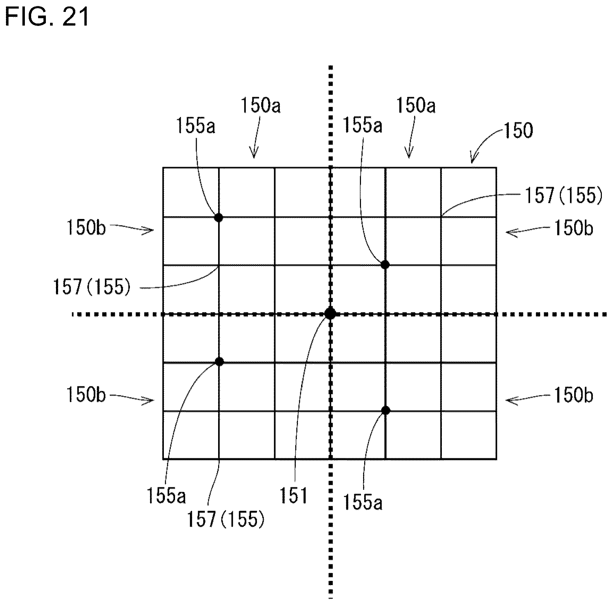

When the robot 10 is determined not to interfere with an obstacle in the interference determination process for the other representative candidate motion path, step s3 is performed. When the robot 10 is determined to interfere with an obstacle in the interference determination process for the other representative candidate motion path, the determiner 21 further divides the multiple candidate motion paths included in each of the two groups into two groups, each including candidate motion paths located adjacent to each other. In this case, as illustrated in FIG. 21, the determiner 21 further splits each of the sections 150a equally into two sections 150b. The plane 150 is thus split into four sections 150b. For each of the sections 150b, the determiner 21 places the multiple candidate motion paths passing through the respective waypoints 155 on the section 150b into one group. The A candidate motion paths are thus divided into four groups.

The determiner 21 then selects, from the multiple candidate motion paths included in each of the groups, the candidate motion path with the highest use priority as a representative candidate motion path. The determiner 21 then selects the representative candidate motion path with the highest use priority from the representative candidate motion paths of the multiple groups (four groups in this example). The determiner 21 performs the interference determination process for the selected representative candidate motion path.

When the robot 10 is determined not to interfere with an obstacle in the interference determination process for the representative candidate motion path with the highest use priority, step s3 described above is performed. When the robot 10 is determined to interfere with an obstacle in the interference determination process for the representative candidate motion path with the highest use priority, the determiner 21 performs the interference determination process for the representative candidate motion path with the second highest use priority. When the robot 10 is determined not to interfere with an obstacle in the interference determination process for the representative candidate motion path with the second highest use priority, step s3 is performed. When the robot 10 is determined to interfere with the obstacle 60 in the interference determination process for the candidate motion path with the second highest use priority, the determiner 21 performs the interference determination process for the representative candidate motion path with the third highest use priority. The determiner 21 thereafter operates in the same manner as or in a similar manner to the above.

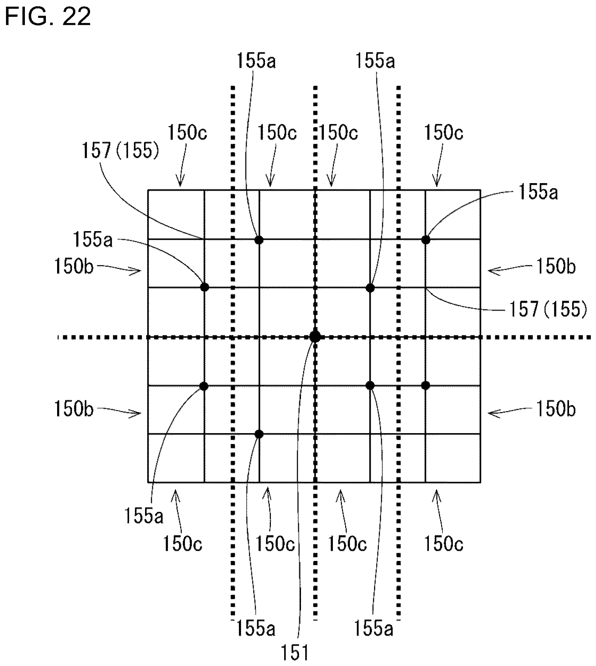

When the robot 10 is determined to interfere with the obstacle 60 for the representative candidate paths included in the respective four groups, the determiner 21 further divides the multiple candidate motion paths included in each of the four groups into two groups, each including candidate motion paths located adjacent to each other. More specifically, as illustrated in FIG. 22, the determiner 21 further splits each of the sections 150b equally into two sections 150c. The plane 150 is thus split into eight sections 150c. For each of the sections 150c, the determiner 21 places the multiple candidate motion paths passing through the respective waypoints 155 on the section 150b into one group. The A candidate motion paths are thus divided into eight groups. The determiner 21 thereafter operates in the same manner as or in a similar manner to the above. The determiner 21 repeatedly performs the division into groups, selection of the representative candidate motion path, and the interference determination process until finding a candidate non-interference path.

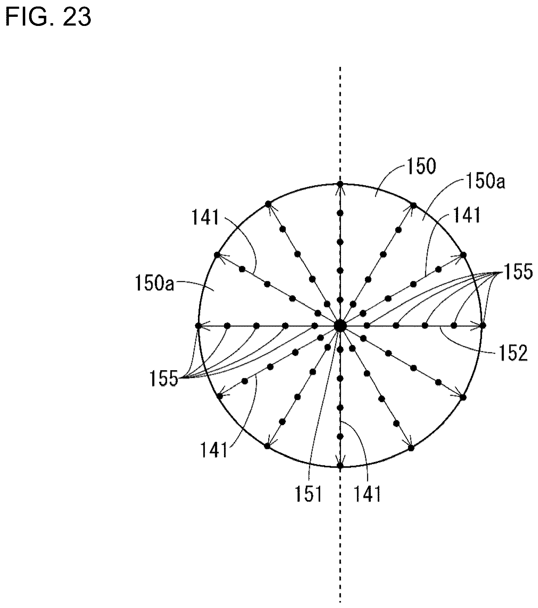

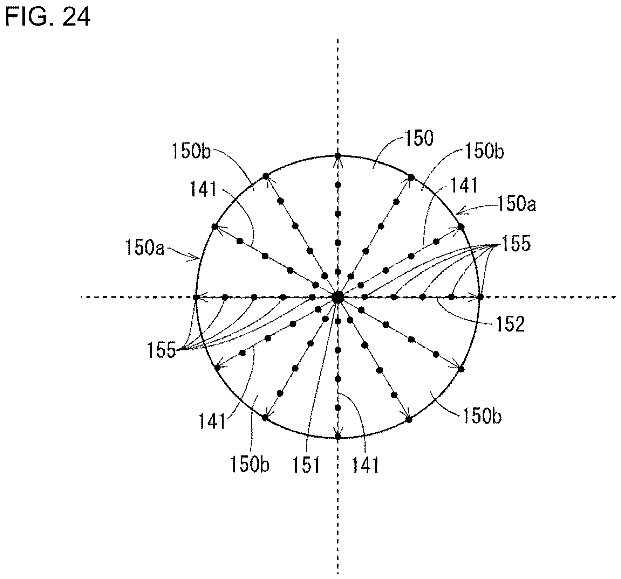

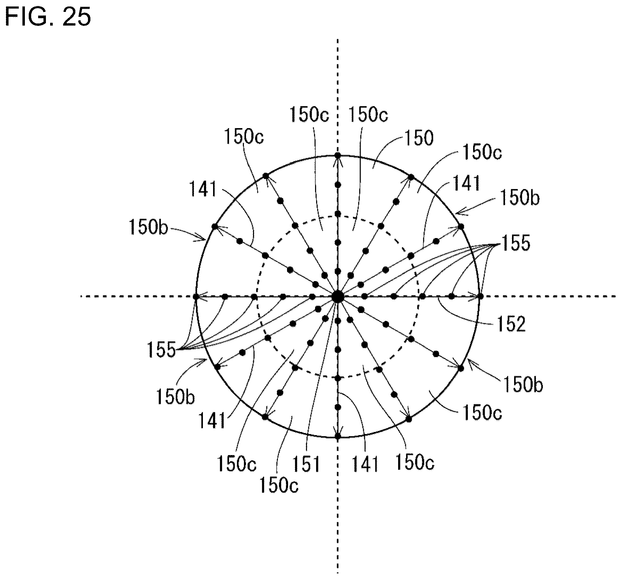

Note that the method for splitting the plane 150 for dividing the A candidate motion paths into groups is not limited to the above example. For example, as in the examples in FIGs. 8 and 9 described above, the position of a waypoint 155 on the plane 150 may be expressed in polar coordinates. A direction in which the starting line 152 extends is referred to as an x1-direction. A direction perpendicular to the x1-direction and along the plane 150 is referred to as a y1-direction. For example, the determiner 21 may first split the plane 150 into two sections 150a in the x1-direction as illustrated in FIG. 23. The determiner 21 may then split each of the sections 150a into two sections 150c in the y1-direction as illustrated in FIG. 24. The determiner 137 may then split each of the sections 150c into two sections 150c in a radial direction as illustrated in FIG. 25.

In the above example, the multiple candidate motion paths are divided into two groups at a time. However, the candidate motion paths may be divided into three, four, or five or more groups at a time.

Thus, in this example, the A candidate motion paths are divided into multiple groups each including candidate motion paths located adjacent to each other. The interference determination process is performed for the candidate motion path with the highest use priority among the multiple candidate motion paths included in each of the multiple groups. The interference determination process can thus be sequentially performed for multiple candidate motion paths with high use priorities located away from one another. This allows rapid finding of a motion path on which the robot 10 does not interfere with an obstacle as appropriate for the work environment of the robot 10.

Example Setting of Motion Path Based on Configuration Space

In the above examples, the controller 2 sets the motion path of the robot 10 based on the physical workspace 100. However, the controller 2 may set the motion path of the robot 10 based on a configuration space (C-space) 500 of the robot 10.

The C-space 500 is, for example, an N-dimensional space defined by N parameters as axis values indicating the posture of the robot 10 (N is an integer greater than or equal to 2). For example, N = 6. The C-space 500 is a six-dimensional space defined by the six parameters $\theta a$, $\theta b$, $\theta c$, $\theta d$, $\theta e$, and $\theta f$ as axis values. The N axes of the C-space 500 are orthogonal to each other. Note that the physical workspace 100 may be an N-dimensional space, where N = 3.

The values of the parameters $\theta a$, $\theta b$, $\theta c$, $\theta d$, $\theta e$, and $\theta f$ are respectively represented by $an$, $bn$, $cn$, $dn$, $en$, and $fn$, where n is a variable that is, for example, an integer greater than or equal to 0. The coordinates of a point (in other words, the coordinates of a position) in the C-space 500 are represented by $(an, bn, cn, dn, en, fn)$.

In the C-space 500, for example, the posture of the robot 10 is indicated by a point. Thus, in the C-space 500, the motion of the robot 10 is indicated by a line.

A position in the C-space 500 corresponds to a specific posture of the robot 10 in the physical workspace 100. In other words, the coordinates of a position in the C-space 500 represent a specific posture of the robot 10 in the physical workspace 100. For example, the coordinates of a position in the C-space 500 may be (a0, b0, c0, d0, e0, f0). The coordinates (a0, b0, c0, d0, e0, f0) represent the posture of the robot 10 at the time when the arm 11 of the robot 10 has the rotation angles $\theta a$, $\theta b$, $\theta c$, $\theta d$, $\theta e$, and $\theta f$ respectively having values of a0, b0, c0, d0, e0, and f0. When the posture of the robot 10 in the physical workspace 100 is determined, the position of the predetermined portion 10P of the robot 10 in the physical workspace 100 is determined. Thus, the coordinates of each position in the C-space 500 may represent the position of the predetermined portion 10P of the robot 10 in the physical workspace 100.

The operation of the controller 2 (specifically, the operations of the priority setter 20, the determiner 21, and the path setter 22) for setting the motion path of the robot 10 based on the C-space 500 is basically the same as or similar to the operation for setting the motion path of the robot 10 based on the physical workspace 100. The operation of the controller 2 for setting the motion path of the robot 10 based on the C-space 500 will now be described focusing on its differences from the operation of the controller 2 for setting the motion path of the robot 10 based on the physical workspace 100. The above explanation for a three-dimensional space will be hereafter generalized to an N-dimensional space as appropriate.

Example Obtaining of Candidate Motion Path

As illustrated in FIG. 25, the controller 2 can obtain A candidate motion paths 135 from the starting point 120 to the ending point 121 of the robot motion in the C-space 500 based on the reference path 130 that is the shortest path connecting the starting point 120 and the ending point 121. For ease of explanation, the C-space 500 is a circle in FIG. 25 and subsequent figures. In this example, the coordinates of the starting point 120 are (a1, b1, c1, d1, e1, f1), and the coordinates of the ending point 121 are (a2, b2, c2, d2, e2, f2).

The coordinates of the starting point 120 in the C-space 500 represent, for example, the posture of the robot 10 at the time when the robot 10 holding the target object 50 starts the transfer motion to transfer the target object 50 to the tray 18. At the start of the transfer motion, the rotation angles $\theta a$, $\theta b$, $\theta c$, $\theta d$, $\theta e$, and $\theta f$ of the arm 11 respectively have values a1, b1, c1, d1, e1, and f1. The ending point 121 in the C-space 500 indicates, for example, the posture of the robot 10 at the time when the robot 10 ends the transfer motion. At the end of the transfer motion, the rotation angles $\theta a$, $\theta b$, $\theta c$, $\theta d$, $\theta e$, and $\theta f$ of the arm 11 respectively have values a2, b2, c2, d2, e2, and f2. In the C-space 500, the line connecting the starting point 120 and the ending point 121 indicates the change in the posture of the robot 10 from the start to the end of the transfer motion. In the C-space 500, the motion path of the robot 10 indicates the change in the posture of the robot 10. In the C-space 500, the line connecting the starting point 120 and the ending point 121 may also indicate the motion of the robot 10 from the start to the end of the transfer motion.

In the C-space 500, the shortest reference path 130 connecting the starting point 120 and the ending point 121 is indicated by the line segment connecting the starting point 120 and the ending point 121.

The coordinates of a point in an N-dimensional space are represented by (H1, H2, ..., HN). The line segment from one point to another point in an N-dimensional space (in other words, a straight line) may be referred to as a collection of points with their coordinates expressed in Formula 15 below using a parameter u.

$$\begin{bmatrix} H1 \\ H2 \\ \vdots \\ HN \end{bmatrix} = \begin{bmatrix} k1 \\ k2 \\ \vdots \\ kN \end{bmatrix} u + \begin{bmatrix} h1 \\ h2 \\ \vdots \\ hN \end{bmatrix} \qquad (15)$$

In Formula 15, k1 to kN and h1 to hN are constants. The position and the length of the line segment in an N-dimensional space are determined by the range of values of the parameter u. The coordinates of each point on the reference path 130 in the C-space 500 can be expressed in the same manner as or in a similar manner to Formula 15. The coordinates of each point on the reference path 130 in the physical workspace 100 can be expressed in the same manner as or in a similar manner to Formula 15.

In the C-space 500 as well, the controller 2 can obtain A candidate motion paths 135 by shifting the reference path 13 as described above.

A plane in a three-dimensional space such as the physical workspace 100 is generally referred to as a hyperplane in an N-dimensional space. The hyperplane is an (N - 1)-dimensional plane. The plane 150 described above may also be referred to as a hyperplane 150. Figures and subspaces in an N-dimensional space are referred to as manifolds. The hyperplane may thus be a type of manifold. The hyperplane may be an (N - 1)-dimensional manifold.

In the C-space 500, the controller 2 can obtain one candidate motion path 135 by parallelly shifting the reference path 130 in the first direction 141 orthogonal to the reference path 130 to cause the reference path 130 to pass through a waypoint on the hyperplane 150 orthogonal to the reference path 130, as in the example described above. In an N-dimensional space, a hyperplane orthogonal to a line segment is a hyperplane on which the inner product of any vector connecting two points on the hyperplane and the vector connecting the two ends of the line segment is zero. Thus, the inner product of any vector connecting two points on the hyperplane 150 and the vector connecting the two ends of the reference path 130 is zero.

The position of a waypoint on the hyperplane 150 can be expressed in polar coordinates, as in the example described above. For the (N - 1)-dimensional hyperplane 150, (N - 1) axes orthogonal to each other are set, separately from the N axes of the C-space 500. The position of a waypoint in an (N - 1)-dimensional manifold (space) defined by the (N - 1) axes is expressed in polar coordinates. In this case, the position of the waypoint on the hyperplane 150 is indicated by a group $(r, \gamma1, \gamma2, ..., \gammaN - 2)$ of the distance r from the origin of the (N - 1)-dimensional manifold to the waypoint and (N - 2) angles $\gamma1$ to $\gammaN - 2$. The controller 2 can change the position $(r, \gamma1, \gamma2, ..., \gammaN - 2)$ of the waypoint by changing the combination of setting values for the distance r and the angle $\gamma1$ to $\gammaN - 2$. In other words, the controller 2 can obtain multiple candidate motion paths 135 in the C-space 500 by changing the combination of the setting values for the distance r and the angles $\gamma1$ to $\gammaN - 2$.

As in the above example, the controller 2 may split the hyperplane 150 in a grid pattern in the C-space 500 and set each grid point on the hyperplane 150 as a waypoint. To split the (N - 1)-dimensional hyperplane 150 in a grid pattern, (N - 1) axes orthogonal to each other are set for the (N - 1)-dimensional hyperplane 150, separately from the N axes of the C-space 500. For each of the (N - 1) axes, the hyperplane 150 is split into Q sections along the axis (Q is an integer greater than or equal to 2). Thus, the (N - 1)-dimensional hyperplane 150 includes grid points as many as the (N - 1)th power of Q. The controller 2 can obtain multiple candidate motion paths in the C-space 500 by changing the grid point to be selected as a waypoint from the grid points as many as the (N - 1)th power of Q.

Note that the A candidate motion paths set in the C-space 500 may include a candidate motion path obtained by rotationally shifting the reference path 130 in the C-space 500. The A candidate motion paths set in the C-space 500 may include a candidate motion path obtained by deforming the reference path 130 in the C-space 500. The A candidate motion paths set in the C-space 500 may include a candidate motion path obtained by both shifting and deforming the reference path 130 in the C-space 500.

Operation Example of Determiner

The representation of the obstacle 60 in the C-space 500 will be described first. A point on the obstacle 60 in the physical workspace 100 is referred to as an obstacle point. In the physical workspace 100, the determiner 21 determines all the postures of the robot 10 including an obstacle point. In other words, the determiner 21 determines all the postures of the robot 10 that interferes with an obstacle point in the physical workspace 100. The determiner 21 performs this process for each obstacle point on the obstacle 60. In the C-space 500, the determiner 21 sets multiple points corresponding to the determined respective postures of the robot 10. An area including the multiple points corresponds to the obstacle 60 in the C-space 500. This area may be hereafter referred to as a C-space obstacle 60c.

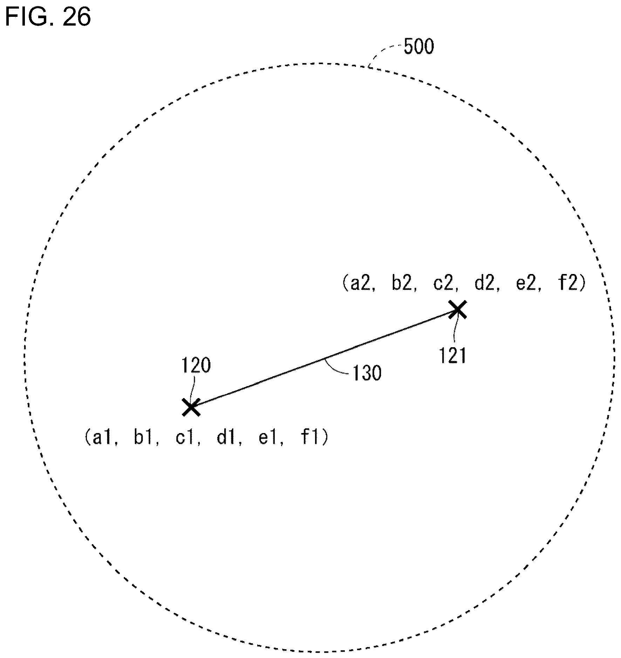

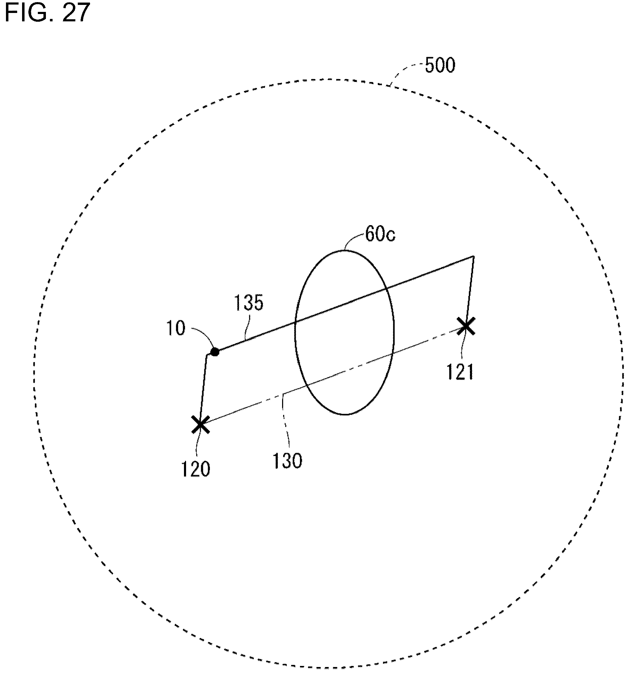

The area of the C-space obstacle 60c in the C-space 500 indicates the posture of the robot 10 that interferes with the obstacle 60 in the physical workspace 100. The C-space obstacle 60c may also be referred to as an interference area. In the interference determination process, the determiner 21 determines that the robot 10 interferes with the obstacle 60 on the focused candidate motion path 135 when the focused candidate motion path 135 interferes with the C-space obstacle 60c in the C-space 500 as illustrated in FIG. 27. In other words, the determiner 21 determines that the robot 10 interferes with the obstacle 60 on the focused candidate motion path 135 when the focused candidate motion path 135 meets the C-space obstacle 60c in the C-space 500. The determiner 21 determines that the robot 10 does not interfere with the obstacle 60 on the focused candidate motion path 135 when the focused candidate motion path 135 does not interfere with the C-space obstacle 60c in the C-space 500, or in other words, when the focused candidate motion path 135 does not meet the C-space obstacle 60c in the C-space 500. In FIG. 26, the robot 10 at a time is indicated by a point in the C-space 500 during motion of the robot 10 along the focused candidate motion path 135.

Operation Example of Priority Setter

The priority setter 20 can set, for example, the specific potential field in the C-space 500 as in the physical workspace 100. The specific potential field that is set in the C-space 500 is, for example, a six-dimensional potential field. Multiple positions x each having a potential are set in the C-space 500. The multiple positions x are six-dimensionally set across the entire C-space 500. In the C-space 500, the potential P(x) at a position x may indicate the degree of acceptability for the robot 10 indicated by a point to pass through the position x. In the C-space 500, the potential P(x) at a position x may indicate the degree of acceptability for the robot 10 to take the posture corresponding to the position x in the physical workspace 100. The specific potential field that is set in the C-space 500 is hereafter referred to as a C-space potential field.

The priority setter 20 can set the use priority of a candidate motion path based on, for example, the C-space potential field. For example, the priority setter 20 sets the use priority of the focused candidate motion path based on the C-space potential field and the focused candidate motion path in the C-space 500. For example, the priority setter 20 calculates, as the potential evaluation value, the summation of the potentials $P(x)$ at the multiple positions x closest to respective representative points 1350 of the focused candidate motion path 135 in the C-space 500. FIG. 29 is a schematic diagram of the multiple representative points 1350 set on the focused candidate motion path 135 in an example. For ease of explanation, the multiple positions x in a C-space potential field 800 set in the C-space 500 are arranged two-dimensionally in FIG. 29. The potential evaluation value calculated for a candidate motion path indicates the use priority of the candidate motion path. The potential evaluation value may be used as described in the above example. The potential $P(x)$ in the C-space 500 may be hereafter referred to as a C-space potential $P(x)$. The potential evaluation value calculated based on the C-space potential $P(x)$ may be referred to as a C-space potential evaluation value.

The priority setter 20 can calculate the obstacle density $po(x)$ in the C-space 500 (also referred to as a C-space obstacle density $po(x)$) as described above. The method for calculating the C-space obstacle density $po(x)$ corresponds to the method for calculating the obstacle density $po(x)$ described above, but with the obstacle 60 replaced by the C-space obstacle 60c. The priority setter 20 can set the C-space potential $P(x)$ based on the C-space obstacle density $po(x)$. For example, the priority setter 20 may set the negative value of the C-space obstacle density $po(x)$ as the C-space potential $P(x)$. When the negative value of the C-space obstacle density $po(x)$ is used as the C-space potential $P(x)$, the C-space potential evaluation value may be hereafter referred to as a C-space obstacle density evaluation value. To set the use priority of a candidate motion path based on the C-space 500, the priority setter 20 uses the C-space obstacle density evaluation value in place of the obstacle density evaluation value $Vpo$ described above.

Example Method for Setting Use Priority Based on Reference Path

The priority setter 20 may set the use priority based on the reference path 130 in the C-space 500. For example, the priority setter 20 calculates a path density $pv(x)$ for each position x in the C-space 500. The path density $pv(x)$ varies based on the degree to which the reference path 130 occupies an area around the position x. In the C-space 500, the path density $pv(x)$ at a position x may refer to a value indicating the degree to which the reference path 130 extends around the position x. The priority setter 20 performs an operation corresponding to the operation in the physical workspace 100 described above, but with the robot density $pr(x)$ replaced by the path density $pv(x)$. The priority setter 20 can thus set the use priority based on the reference path 130 in the C-space 500. The priority setter 20 can calculate the path density $pv(x)$ in the same manner as or in a similar manner to, for example, the obstacle density $po(x)$ and the robot density $pr(x)$.

In the C-space 500, the priority setter 20 may calculate the summation of path densities $pv(x)$ at the multiple positions x closest to the respective representative points 1350 of a candidate motion path 135, and use the summation as a path density evaluation value $Vpv$ of the candidate motion path. The path density evaluation value $Vpv$ of the focused candidate motion path may refer to an evaluation value indicating the proximity of the focused candidate motion path to the reference path 130 in the C-space 500. The priority setter 20 may set the use priority of the candidate motion path based on the path density evaluation value $Vpv$ of the candidate motion path. The priority setter 20 performs an operation corresponding to the operation in the physical workspace 100 described above, but with the robot-density evaluation value $Vpr$ replaced by the path density evaluation value $V\rho v$. The priority setter 20 can thus set the use priority of a candidate motion path based on the path density evaluation value $Vpv$ of the candidate motion path.

The priority setter 20 may set the use priority of a candidate motion path based on the proximity of the candidate motion path to the reference path 130 in the C-space 500 as described above. In the C-space 500, the reference-path proximity evaluation value indicating the degree of proximity of the candidate motion path to the reference path 130 is calculated in the same manner as or in a similar manner to the above.

Example Method for Setting Use Priority Based on Past Motion Path of Robot

The priority setter 20 may set the use priority based on the past set path in the C-space 500. For example, the priority setter 20 calculates a path density $pw(x)$ for each position x in the C-space 500. The path density $pw(x)$ varies based on the degree to which the latest set path occupies an area around the position x. In the C-space 500, the path density $pw(x)$ at a position x may refer to a value indicating the degree to which the latest set path extends around the position x. The priority setter 20 determines the use priority based on the path density $pw(x)$. The priority setter 20 performs an operation corresponding to the operation in the physical workspace 100 described above, but with the first robot density $ps(x)$ replaced by the path density $pw(x)$. The priority setter 20 can thus set the use priority based on the past set path in the C-space 500. The priority setter 20 can calculate the path density $pw(x)$ in the same manner as or in a similar manner to, for example, the obstacle density $po(x)$ and the robot density $pr(x)$.

In the C-space 500, the priority setter 20 may calculate the summation of path densities $pw(x)$ at the multiple positions x closest to the respective representative points 1350 of a candidate motion path 135, and use the summation as a path density evaluation value $V\rho w$ of the candidate motion path. The path density evaluation value Vpw of a candidate motion path may refer to an evaluation value indicating the proximity of the candidate motion path to the latest set path in the C-space 500. The priority setter 20 may set the use priority of the candidate motion path based on the path density evaluation value $V\rho w$ of the candidate motion path. The priority setter 20 performs an operation corresponding to the operation in the physical workspace 100 described above, but with the robot-density evaluation value Vps replaced by the path density evaluation value Vpw. The priority setter 20 can thus set the use priority based on the path density evaluation value Vpw.

The priority setter 20 may set the use priority based on J set paths recently set by the path setter 22 in the C-space 500. In this case, for example, the priority setter 20 calculates a path density pwj(x) for each position x in the C-space 500. The path density pwj(x) varies based on the degree to which the j-th set path occupies an area around the position x. The priority setter 20 determines the use priority based on the J path densities pw1(x) to pwJ(x). The priority setter 20 performs an operation corresponding to the operation in the physical workspace 100 described above, but with the J first robot densities ps1(x) to psJ(x) replaced by the J path densities pw1(x) to pwJ(x). The priority setter 20 can thus set the use priority based on the J path densities pw1(x) to pwJ(x).

In the C-space 500, the priority setter 20 may calculate the summation of path densities pwj(x) at the multiple positions x closest to the respective representative points 1350 of a candidate motion path 135, and use the summation as a path density evaluation value Vpjw of the candidate motion path. The priority setter 20 may set the use priority of the candidate motion path based on the J path density evaluation values $V\rho w1$ to VpwJ of the candidate motion path. The priority setter 20 performs an operation corresponding to the operation in the physical workspace 100 described above, but with the J robot-density evaluation values $V\rho s1$ to VpsJ replaced by the J path density evaluation values $V\rho w1$ to VpwJ. The priority setter 20 can thus set the use priority based on the J path density evaluation values Vpw1 to VpwJ.

The priority setter 20 may set the use priority of a candidate motion path based on the proximity of the candidate motion path to the latest set path in the C-space 500. In the C-space 500, the reference-path proximity evaluation value V1s indicating the degree of proximity of the candidate motion path to the latest set path is calculated in the same manner as or in a similar manner to the physical workspace 100. In the C-space 500, the priority setter 20 may calculate, for each of the first set path to the J-th set path, the j-th set-path proximity evaluation value V1sj indicating the degree of proximity of the candidate motion path to the j-th set path. The priority setter 20 may set the use priority of the candidate motion path based on the J evaluation values from the first set-path proximity evaluation value V1s1 to the J-th set-path proximity evaluation value V1sJ of the candidate motion path as described above.

The priority setter 20 may set the use priority based on the past set path in the C-space 500 and the result of motion of the robot 10 along the past set path. The priority setter 20 performs an operation corresponding to the operation in the physical workspace 100 described above, but with the robot density ps(x) replaced by the path density pw(x), with the robot-density evaluation value Vps replaced by the path density evaluation value $V\rho w$, or with the J robot-density evaluation values Vps1 to VpsJ replaced by the J path density evaluation values Vpw1 to VpwJ. The priority setter 20 can thus set the use priority based on the past set path in the C-space 500 and the result of motion of the robot 10 along the past set path.

For the motion in the C-space 500 as well, the priority setter 20 may determine whether to use the past set path for setting the use priority based on a change in the robot work environment. The priority setter 20 can determine whether the robot work environment has changed based on the C-space 500, in the same manner as or in a similar manner to determining whether the robot work environment has changed based on the physical workspace 100. Note that, for the motion in the C-space 500 as well, the priority setter 20 may determine whether to use the past set path for setting the use priority in response to an instruction from the user.

Example Method For Setting Use Priority Based on Specific Area

In the C-space 500, the priority setter 20 may set the use priority based on the specific area 400 through which the robot 10 indicated by a point is to avoid passing. The priority setter 20 can set the use priority based on the specific area 400 in the C-space 500 by performing an operation that is the same as or similar to the operation in the physical workspace 100 described above.

The specific area 400 in the C-space 500 may be defined based on, for example, an area in the physical workspace 100 that is more likely to be accessed by a person. An area in the physical workspace 100 that is more likely to be accessed by a person is hereafter referred to as a high accessibility area. A point included in the high accessibility area is referred to as a target point. In the physical workspace 100, the priority setter 20 determines all the postures of the robot 10 including a target point. In other words, the priority setter 20 determines all the postures of the robot 10 that interferes with a target point in the physical workspace 100. The priority setter 20 performs this process for each target point in the high accessibility area. In the C-space 500, the priority setter 20 sets multiple points corresponding to the determined respective postures of the robot 10. An area including the multiple points is referred to as a C-space area corresponding to the high accessibility area. The specific area 400 in the C-space 500 may include the C-space area corresponding to the high accessibility area. The C-space area corresponding to the high accessibility area may indicate the posture of the robot 10 that interferes with the high accessibility area in the physical workspace 100.

Note that the present disclosure is not limited to the above example in which the specific area 400 is defined based on an area that is more likely to be accessed by a person. For example, a motion path of production equipment that cooperates with the robot 10 may be defined as the specific area 400. For example, a high-uncertainty area may also be defined as the specific area 400, including an area in a production line that may receive splashes of water or sparks or an area in which a machine or other equipment that moves unpredictably is located.

Operation Example of Determiner

In the C-space 500 as well, the determiner 21 can set the motion path of the robot 10 as described above. In the C-space 500, the determiner 21 may divide the A candidate motion paths into multiple groups each including candidate motion paths located adjacent to each other. The determiner 21 may select, from the candidate motion paths included in each of the multiple groups, the candidate motion path with the highest use priority, and perform the interference determination process for the selected candidate motion path. The operation of the determiner 21 in this case corresponds to the operation in the physical workspace 100 described above, but with the plane 150 replaced by the (N - 1)-dimensional hyperplane 150. The sections 150a, 150b, and 150c described above are (N - 1)-dimensional manifolds in the C-space 500.

The motion path setting device has been described in detail, but the above structures are illustrative in all respects, and the present disclosure is not limited to the above structures. The above embodiments may be combined in any manner unless any contradiction arises. Many variations not specifically described above may also be contemplated without departing from the scope of the present disclosure.

Note that the controller 2 may perform the process for the physical workspace 100 and the process for the C-space 500 in a mixed manner. For example, the determiner 21 may set the use priority of a candidate motion path in the C-space 500, and perform the interference determination process for the candidate motion path in the physical workspace 100. The determiner 21 may instead set the use priority of a candidate motion path in the physical workspace 100, and perform the interference determination process for the candidate motion path 135 in the C-space 500.

The present disclosure provides the structures described below.

In one embodiment, (1) a motion path setting device includes a priority setter that sets a use priority of each of a plurality of candidate motion paths of a robot, a determiner that selects at least one candidate motion path of the plurality of candidate motion paths based on the use priority and performs an interference determination process to determine whether the robot interferes with an obstacle for the selected at least one candidate motion path, and a path setter that sets a motion path of the robot based on a candidate motion path of the plurality of candidate motion paths on which the robot is determined not to interfere with the obstacle by the determiner.

(2) In the motion path setting device according to (1), the priority setter sets the use priority based on obstacle information about the obstacle.

(3) In the motion path setting device according to (2), the priority setter calculates an obstacle density based on the obstacle information for each of a plurality of positions in a multidimensional space and sets the use priority based on the calculated obstacle density. The obstacle density varies based on a degree to which the obstacle occupies an area around a corresponding position of the plurality of positions. The multidimensional space is a physical workspace of the robot or a configuration space of the robot.

(4) In the motion path setting device according to (1), the priority setter sets the use priority based on a potential field being set in the multidimensional space being the physical workspace of the robot or the configuration space of the robot. A position in the potential field has a potential indicating a degree of acceptability for the robot to pass through the position in the multidimensional space.

(5) In the motion path setting device according to (4), the potential field is set in the physical workspace. The priority setter calculates summations of potentials for a plurality of respective postures of the robot on a candidate motion path of the plurality of candidate motion paths, and sets the use priority of the candidate motion path based on a summation of the summations calculated for the plurality of respective postures. Each of the summations is a summation of potentials at a plurality of positions included in an area in the physical workspace occupied by the robot in a corresponding posture of the plurality of postures.

(6) In the motion path setting device according to (4), the potential field is set in the physical workspace. The priority setter identifies potentials for a plurality of respective postures of the robot on a candidate motion path of the plurality of candidate motion paths, and sets the use priority of the candidate motion path based on a summation of the potentials identified for the plurality of respective postures. Each of the potentials is a potential at a position closest to a representative point of the robot in a corresponding posture of the plurality of postures in the physical workspace.

(7) In the motion path setting device according to (4), the potential field is set in the physical workspace. The priority setter calculates summations of potentials for a plurality of respective postures of the robot on a candidate motion path of the plurality of candidate motion paths, and sets the use priority of the candidate motion path based on a summation of the summations calculated for the plurality of respective postures. Each of the summations is a summation of potentials at a plurality of positions closest to a plurality of respective representative points of the robot in a corresponding posture of the plurality of postures in the physical workspace.

(8) In the motion path setting device according to (4), the potential field is set in the configuration space. The priority setter calculates a summation of potentials at a plurality of positions closest to a plurality of respective representative points of a candidate motion path of the plurality of candidate motion paths in the configuration space, and sets the use priority of the candidate motion path based on the summation.

(9) In the motion path setting device according to any one of (4) to (8), the priority setter calculates an obstacle density and sets the potential based on the calculated obstacle density for each of a plurality of positions in the multidimensional space. The obstacle density varies based on a degree to which the obstacle occupies an area around a corresponding position of the plurality of positions.

(10) In the motion path setting device according to (3) or (9), the priority setter sets a plurality of representative points on the obstacle in the multidimensional space. The priority setter sets the obstacle density at a position in the multidimensional space based on at least one of the plurality of representative points located within a predetermined range from the position.

(11) In the motion path setting device according to any one of (3), (9), and (10), the obstacle density at a position in the multidimensional space varies based on proximity of the position to the obstacle around the position.

(12) In the motion path setting device according to any one of (1) to (11), the priority setter sets the use priority based on a past motion path being the motion path set by the path setter in a past.

(13) In the motion path setting device according to (12), the priority setter sets the use priority of a candidate motion path of the plurality of candidate motion paths based on proximity of the candidate motion path to the past motion path in the multidimensional space being the physical workspace of the robot or the configuration space of the robot.

(14) In the motion path setting device according to (12), the priority setter sets the use priority of a candidate motion path of the plurality of candidate motion paths based on a difference of a posture change pattern of the robot on the candidate motion path from a posture change pattern of the robot on the past motion path in the physical workspace of the robot.

(15) In the motion path setting device according to (12), the priority setter calculates a first robot density for each of a plurality of positions in the physical workspace of the robot and sets the use priority based on the calculated first robot density. The first robot density varies based on a degree to which a space through which the robot moving along the past motion path passes occupies an area around a corresponding position of the plurality of positions.

(16) In the motion path setting device according to (12), the priority setter calculates a first path density for each of a plurality of positions in the configuration space of the robot and sets the use priority based on the calculated first path density. The first path density varies based on a degree to which the past motion path occupies an area around a corresponding position of the plurality of positions.

(17) In the motion path setting device according to any one of (12) to (16), the priority setter sets the use priority based on a result of motion of the robot along the past motion path.

(18) In the motion path setting device according to any one of (12) to (17), the priority setter determines, based on a change in a work environment of the robot, whether to use the past motion path for setting the use priority.

(19) In the motion path setting device according to any one of (1) to (18), the priority setter sets the use priority based on a specific area in the multidimensional space being the physical workspace of the robot or the configuration space of the robot. The specific area is an area through which the robot is to avoid passing.

(20) In the motion path setting device according to (19), the priority setter sets the use priority of a candidate motion path of the plurality of candidate motion paths based on proximity of the candidate motion path to the specific area in the multidimensional space.

(21) In the motion path setting device according to (19) or (20), the priority setter calculates a specific-area density for each of a plurality of positions in the multidimensional space and sets the use priority based on the calculated specific-area density. The specific-area density varies based on a degree to which the specific area occupies an area around a corresponding position of the plurality of positions.

(22) In the motion path setting device according to any one of (2), (3), and (9) to (21), the priority setter sets the use priority based on a reference path being a shortest path connecting a starting point and an ending point of motion of the robot in the multidimensional space being the physical workspace of the robot or the configuration space of the robot.

(23) In the motion path setting device according to (22), the priority setter sets the use priority of a candidate motion path of the plurality of candidate motion paths based on proximity of the candidate motion path to the reference path in the multidimensional space.

(24) In the motion path setting device according to (22), the priority setter sets the use priority of a candidate motion path of the plurality of candidate motion paths based on a difference of a posture change pattern of the robot on the candidate motion path from a posture change pattern of the robot on the reference path in the physical workspace.

(25) In the motion path setting device according to (22), the priority setter calculates a second robot density for each of a plurality of positions in the physical workspace and sets the use priority based on the calculated second robot density. The second robot density varies based on a degree to which a space through which the robot moving along the reference path passes occupies an area around a corresponding position of the plurality of positions.

(26) In the motion path setting device according to (22), the priority setter calculates a second path density for each of a plurality of positions in the configuration space and sets the use priority based on the calculated second path density. The second path density varies based on a degree to which the reference path occupies an area around a corresponding position of the plurality of positions.

(27) In the motion path setting device according to any one of (1) to (26), the determiner performs the interference determination process selectively for the at least one candidate motion path of the plurality of candidate motion paths selected based on the use priority, or the determiner performs the interference determination process for one or more of the plurality of candidate motion paths selected in an order based on the use priority.

(28) In the motion path setting device according to any one of (1) to (26), the determiner divides the plurality of candidate motion paths into a plurality of groups each including candidate motion paths located adjacent to each other in the multidimensional space being the physical workspace of the robot or the configuration space of the robot. The determiner selects, from the candidate motion paths included in each of the plurality of groups, a candidate motion path with a highest use priority, and performs the interference determination process for the selected candidate motion path.

(29) A program causes a computer to perform operations including setting a use priority of each of a plurality of candidate motion paths of a robot, selecting at least one candidate motion path of the plurality of candidate motion paths based on the use priority and performing an interference determination process to determine whether the robot interferes with an obstacle for the selected at least one candidate motion path, and setting a motion path of the robot based on a candidate motion path of the plurality of candidate motion paths on which the robot is determined not to interfere with the obstacle.

REFERENCE SIGNS

1 motion path setting device
10, 10a, 10b robot
20 priority setter
21 determiner
22 path setter
30 program
32 obstacle information
60 obstacle
60a portion
100 physical workspace
115 robot area
117, 117a, 117b representative point
120 starting point
121 ending point
130, 130i reference path
135 candidate motion path
300 reference-path sweep space
400 specific area
500 configuration space
600 obstacle representative point

**Claims**

1. A motion path setting device, comprising:

a priority setter configured to set a use priority of each of a plurality of candidate motion paths of a robot;
a determiner configured to select at least one candidate motion path of the plurality of candidate motion paths based on the use priority and perform an interference determination process to determine whether the robot interferes with an obstacle for the selected at least one candidate motion path; and
a path setter configured to set a motion path of the robot based on a candidate motion path of the plurality of candidate motion paths on which the robot is determined not to interfere with the obstacle by the determiner.

2. The motion path setting device according to claim 1, wherein
the priority setter sets the use priority based on obstacle information about the obstacle.

3. The motion path setting device according to claim 2, wherein
the priority setter calculates an obstacle density based on the obstacle information for each of a plurality of positions in a multidimensional space and sets the use priority based on the calculated obstacle density, the obstacle density varies based on a degree to which the obstacle occupies an area around a corresponding position of the plurality of positions, and the multidimensional space is a physical workspace of the robot or a configuration space of the robot.

4. The motion path setting device according to claim 1, wherein

the priority setter sets the use priority based on a potential field being set in the multidimensional space being the physical workspace of the robot or the configuration space of the robot, and
a position in the potential field has a potential indicating a degree of acceptability for the robot to pass through the position in the multidimensional space.

5. The motion path setting device according to claim 4, wherein

the potential field is set in the physical workspace, and
the priority setter calculates summations of potentials for a plurality of respective postures of the robot on a candidate motion path of the plurality of candidate motion paths, and sets the use priority of the candidate motion path based on a summation of the summations calculated for the plurality of respective postures, and each of the summations is a summation of potentials at a plurality of positions included in an area in the physical workspace occupied by the robot in a corresponding posture of the plurality of postures.

6. The motion path setting device according to claim 4, wherein

the potential field is set in the physical workspace, and
the priority setter identifies potentials for a plurality of respective postures of the robot on a candidate motion path of the plurality of candidate motion paths, and sets the use priority of the candidate motion path based on a summation of the potentials identified for the plurality of respective postures, and each of the potentials is a potential at a position closest to a representative point of the robot in a corresponding posture of the plurality of postures in the physical workspace.

7. The motion path setting device according to claim 4, wherein

the potential field is set in the physical workspace, and
the priority setter calculates summations of potentials for a plurality of respective postures of the robot on a candidate motion path of the plurality of candidate motion paths, and sets the use priority of the candidate motion path based on a summation of the summations calculated for the plurality of respective postures, and each of the summations is a summation of potentials at a plurality of positions closest to a plurality of respective representative points of the robot in a corresponding posture of the plurality of postures in the physical workspace.

8. The motion path setting device according to claim 4, wherein

the potential field is set in the configuration space, and
the priority setter calculates a summation of potentials at a plurality of positions closest to a plurality of respective representative points of a candidate motion path of the plurality of candidate motion paths in the configuration space, and sets the use priority of the candidate motion path based on the summation.

9. The motion path setting device according to any one of claims 4 to 8, wherein
the priority setter calculates an obstacle density and sets the potential based on the calculated obstacle density for each of a plurality of positions in the multidimensional space, and the obstacle density varies based on a degree to which the obstacle occupies an area around a corresponding position of the plurality of positions.

**10.** The motion path setting device according to claim 3 or claim 9, wherein

the priority setter sets a plurality of representative points on the obstacle in the multidimensional space, and
the priority setter sets the obstacle density at a position in the multidimensional space based on at least one of the plurality of representative points located within a predetermined range from the position.

**11.** The motion path setting device according to any one of claims 3, 9, and 10, wherein
the obstacle density at a position in the multidimensional space varies based on proximity of the position to the obstacle around the position.

**12.** The motion path setting device according to any one of claims 1 to 11, wherein
the priority setter sets the use priority based on a past motion path being the motion path set by the path setter in a past.

**13.** The motion path setting device according to claim 12, wherein
the priority setter sets the use priority of a candidate motion path of the plurality of candidate motion paths based on proximity of the candidate motion path to the past motion path in the multidimensional space being the physical workspace of the robot or the configuration space of the robot.

**14.** The motion path setting device according to claim 12, wherein
the priority setter sets the use priority of a candidate motion path of the plurality of candidate motion paths based on a difference of a posture change pattern of the robot on the candidate motion path from a posture change pattern of the robot on the past motion path in the physical workspace of the robot.

**15.** The motion path setting device according to claim 12, wherein
the priority setter calculates a first robot density for each of a plurality of positions in the physical workspace of the robot and sets the use priority based on the calculated first robot density, and the first robot density varies based on a degree to which a space through which the robot moving along the past motion path passes occupies an area around a corresponding position of the plurality of positions.

**16.** The motion path setting device according to claim 12, wherein
the priority setter calculates a first path density for each of a plurality of positions in the configuration space of the robot and sets the use priority based on the calculated first path density, and the first path density varies based on a degree to which the past motion path occupies an area around a corresponding position of the plurality of positions.

**17.** The motion path setting device according to any one of claims 12 to 16, wherein
the priority setter sets the use priority based on a result of motion of the robot along the past motion path.

**18.** The motion path setting device according to any one of claims 12 to 17, wherein
the priority setter determines, based on a change in a work environment of the robot, whether to use the past motion path for setting the use priority.

**19.** The motion path setting device according to any one of claims 1 to 18, wherein
the priority setter sets the use priority based on a specific area in the multidimensional space being the physical workspace of the robot or the configuration space of the robot, and the specific area is an area through which the robot is to avoid passing.

**20.** The motion path setting device according to claim 19, wherein
the priority setter sets the use priority of a candidate motion path of the plurality of candidate motion paths based on proximity of the candidate motion path to the specific area in the multidimensional space.

**21.** The motion path setting device according to claim 19, wherein
the priority setter calculates a specific-area density for each of a plurality of positions in the multidimensional space and sets the use priority based on the calculated specific-area density, and the specific-area density varies based on a degree to which the specific area occupies an area around a corresponding position of the plurality of positions.

**22.** The motion path setting device according to any one of claims 2, 3, and 9 to 21, wherein
the priority setter sets the use priority based on a reference path being a shortest path connecting a starting point and an ending point of motion of the robot in the multidimensional space being the physical workspace of the robot or the configuration space of the robot.

23. The motion path setting device according to claim 22, wherein
the priority setter sets the use priority of a candidate motion path of the plurality of candidate motion paths based on proximity of the candidate motion path to the reference path in the multidimensional space.

24. The motion path setting device according to claim 22, wherein
the priority setter sets the use priority of a candidate motion path of the plurality of candidate motion paths based on a difference of a posture change pattern of the robot on the candidate motion path from a posture change pattern of the robot on the reference path in the physical workspace.

25. The motion path setting device according to claim 22, wherein
the priority setter calculates a second robot density for each of a plurality of positions in the physical workspace and sets the use priority based on the calculated second robot density, and the second robot density varies based on a degree to which a space through which the robot moving along the reference path passes occupies an area around a corresponding position of the plurality of positions.

26. The motion path setting device according to claim 22, wherein
the priority setter calculates a second path density for each of a plurality of positions in the configuration space and sets the use priority based on the calculated second path density, and the second path density varies based on a degree to which the reference path occupies an area around a corresponding position of the plurality of positions.

27. The motion path setting device according to any one of claims 1 to 26, wherein

the determiner performs the interference determination process selectively for the at least one candidate motion path of the plurality of candidate motion paths selected based on the use priority, or
the determiner performs the interference determination process for one or more of the plurality of candidate motion paths selected in an order based on the use priority.

28. The motion path setting device according to any one of claims 1 to 26, wherein

the determiner divides the plurality of candidate motion paths into a plurality of groups each including candidate motion paths located adjacent to each other in the multidimensional space being the physical workspace of the robot or the configuration space of the robot, and
the determiner selects, from the candidate motion paths included in each of the plurality of groups, a candidate motion path with a highest use priority, and performs the interference determination process for the selected candidate motion path.

29. A program for causing a computer to perform operations comprising:

setting a use priority of each of a plurality of candidate motion paths of a robot;
selecting at least one candidate motion path of the plurality of candidate motion paths based on the use priority and performing an interference determination process to determine whether the robot interferes with an obstacle for the selected at least one candidate motion path; and
setting a motion path of the robot based on a candidate motion path of the plurality of candidate motion paths on which the robot is determined not to interfere with the obstacle.

FIG. 1

FIG. 2

FIG. 3

FIG. 4

FIG. 5

```
        ┌──────────────┐
        │    Start     │
        └──────┬───────┘
               │
               ▼                    s1
   ┌───────────────────────────┐
   │  Priority setting process │
   └─────────────┬─────────────┘
                 │
                 ▼                  s2
   ┌───────────────────────────┐
   │     Selection process     │
   └─────────────┬─────────────┘
                 │
                 ▼                  s3
   ┌───────────────────────────┐
   │    Path setting process   │
   └─────────────┬─────────────┘
                 │
                 ▼
        ┌──────────────┐
        │     End      │
        └──────────────┘
```

FIG. 6

FIG. 7

FIG. 8

FIG. 9

FIG. 10

## FIG. 11

P(x)

## FIG. 12

FIG. 13

FIG. 14

FIG. 15

FIG. 16

FIG. 17

120  130a  135a           130           135a  130a  121

350a                                    350a

FIG. 18

117a (117)

10a (10)

d20

117b (117)

10b (10)

FIG. 19

100

400

130

120                              121

17        60        15        16        18

FIG. 20

FIG. 21

FIG. 22

FIG. 23

FIG. 24

FIG. 25

FIG. 26

FIG. 27

FIG. 28

## INTERNATIONAL SEARCH REPORT

| International application No. |
|---|
| **PCT/JP2023/038334** |

**A. CLASSIFICATION OF SUBJECT MATTER**

*B25J 13/00*(2006.01)i; *G05B 19/4093*(2006.01)i; *G05B 19/4155*(2006.01)i
FI: B25J13/00 Z; G05B19/4093 E; G05B19/4155 N

According to International Patent Classification (IPC) or to both national classification and IPC

**B. FIELDS SEARCHED**

Minimum documentation searched (classification system followed by classification symbols)

B25J13/00; G05B19/4093; G05B19/4155

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2022-155828 A (TOYOTA MOTOR CORP.) 14 October 2022 (2022-10-14) | 1, 27-29 |
|  | paragraphs [0017], [0030], [0079] | |
| Y | paragraphs [0017], [0030], [0079] | 2-28 |
| X | WO 2018/185852 A1 (MUJIN, INC.) 11 October 2018 (2018-10-11) | 1, 27-29 |
|  | paragraphs [0111]-[0133] | |
| Y | paragraphs [0111]-[0133] | 2-28 |
| X | JP 05-127718 A (FUJITSU LTD.) 25 May 1993 (1993-05-25) | 1, 27-29 |
|  | paragraphs [0027]-[0034], [0076]-[0098], [0114]-[0117] | |
| Y | paragraphs [0027]-[0034], [0076]-[0098], [0114]-[0117] | 2-28 |
| Y | JP 2015-160277 A (FANUC LTD.) 07 September 2015 (2015-09-07) | 2-28 |
|  | paragraph [0033] | |
| Y | JP 2007-257274 A (TOYOTA MOTOR CORP.) 04 October 2007 (2007-10-04) | 12-28 |
|  | paragraphs [0009]-[0010] | |

☑ Further documents are listed in the continuation of Box C.     ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **15 December 2023** | **26 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| | International application No. |
| :--- | :--- |
| | **PCT/JP2023/038334** |

**C. DOCUMENTS CONSIDERED TO BE RELEVANT**

| Category* | Citation of document, with indication, where appropriate, of the relevant passages | Relevant to claim No. |
| :---: | :--- | :---: |
| Y | JP 2020-169900 A (ALPINE ELECTRONICS INC.) 15 October 2020 (2020-10-15)<br>paragraphs [0081]-[0085] | 19-28 |
| Y | WO 2018/092860 A1 (MITSUBISHI ELECTRIC CORP.) 24 May 2018 (2018-05-24)<br>paragraphs [0004], [0088] | 19-28 |
| Y | US 2022/0147058 A1 (INTRINSIC INNOVATION LLC) 12 May 2022 (2022-05-12)<br>paragraphs [0050], [0063]-[0063], [0090]-[0096] | 22-28 |

Form PCT/ISA/210 (second sheet) (January 2015)

## INTERNATIONAL SEARCH REPORT
### Information on patent family members

International application No.

**PCT/JP2023/038334**

| Patent document cited in search report | | | Publication date (day/month/year) | Patent family member(s) | | | Publication date (day/month/year) |
|---|---|---|---|---|---|---|---|
| JP | 2022-155828 | A | 14 October 2022 | US 2022/0317696 A1 paragraphs [0035], [0048], [0097] | | | |
| WO | 2018/185852 | A1 | 11 October 2018 | US 2020/0030977 A1 paragraphs [0131]-[0153] CN 110494258 A | | | |
| JP | 05-127718 | A | 25 May 1993 | US 5530791 A column 5, line 40 to column 7, line 17, column 9, line 39 to column 10, line 61, column 11, lines 45-67 EP 543236 A2 | | | |
| JP | 2015-160277 | A | 07 September 2015 | US 2015/0239121 A1 paragraphs [0042]-[0047] DE 102015102399 A1 CN 104875203 A | | | |
| JP | 2007-257274 | A | 04 October 2007 | (Family: none) | | | |
| JP | 2020-169900 | A | 15 October 2020 | (Family: none) | | | |
| WO | 2018/092860 | A1 | 24 May 2018 | (Family: none) | | | |
| US | 2022/0147058 | A1 | 12 May 2022 | WO 2020/219734 A1 paragraphs [0050]-[0051], [0064]-[0067], [0091]-[0097] EP 3941692 A1 CN 114144285 A KR 10-2022-0099096 A JP 2022-529776 A | | | |

Form PCT/ISA/210 (patent family annex) (January 2015)

**EP 4 613 444 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000020117 A